(19) Europäisches Patentamt
European Patent Office
Office européen des brevets

(11) EP 4 455 740 A1

(12) # EUROPEAN PATENT APPLICATION

published in accordance with Art. 153(4) EPC

(43) Date of publication:
**30.10.2024 Bulletin 2024/44**

(21) Application number: **22911308.9**

(22) Date of filing: **21.12.2022**

(51) International Patent Classification (IPC):
***G02B 1/04** (2006.01)* ***G02C 7/00** (2006.01)*

(52) Cooperative Patent Classification (CPC):
**G02B 1/04; G02C 7/00**

(86) International application number:
**PCT/JP2022/047221**

(87) International publication number:
**WO 2023/120606 (29.06.2023 Gazette 2023/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.12.2021 JP 2021211520**

(71) Applicant: **MITSUI CHEMICALS, INC.**
**Tokyo 104-0028 (JP)**

(72) Inventor: **ITO, Shinsuke**
**Omuta-shi, Fukuoka 836-8610 (JP)**

(74) Representative: **Mewburn Ellis LLP**
**Aurora Building**
**Counterslip**
**Bristol BS1 6BX (GB)**

(54) **METHOD FOR MANUFACTURING OPTICAL MEMBER AND CURED PRODUCT**

(57) A method of producing an optical member includes: a first step of using a mold member and a substrate provided with a depressed portion including a bottom portion and an opening, to place the mold member at the opening, thereby defining a space between the depressed portion and the mold member; a second step of placing, in the space, a polymerizable composition containing a monomer for an optical material; and a third step of curing the monomer for an optical material in the polymerizable composition, thereby obtaining a cured product of the polymerizable composition. The opening of the depressed portion has a larger area than the area of the bottom portion.

FIG.1

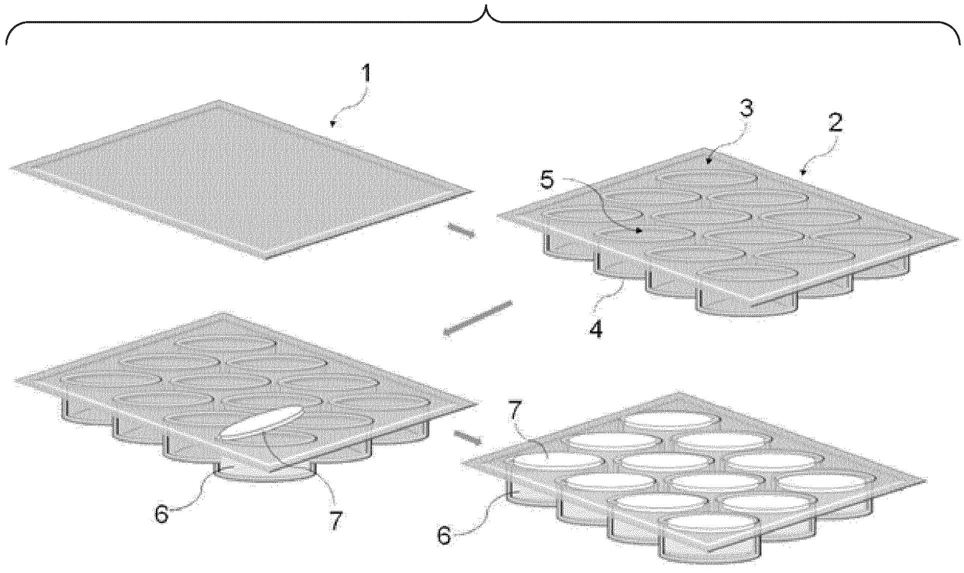


EP 4 455 740 A1

## Description

### Technical Field

The present disclosure relates to a method of producing an optical member, and a cured product.

### Background Art

Examples of methods of producing resins used in optical members for plastic lenses include the casting polymerization method, which includes injecting a polymerizable composition containing a monomer into a mold (cast) and curing the composition by heating.

In the casting polymerization method, after a polymerizable composition is prepared and degassed, the polymerizable composition is injected into a mold (cast) and curing by heating (a polymerization reaction) is performed, and then a product is taken out of (released from) the mold and annealed, to obtain an optical member (for example, a lens or a semifinished blank).

From the viewpoint of improving the quality of the optical member, the curing by heating generally includes allowing a polymerization reaction to proceed for from several hours to several tens of hours while the temperature is gradually increased by heating, and, specifically, a duration of from about 20 hours to about 48 hours is generally required. It is known that a large proportion of the total production process time (for example, nine tenths the total time) is spent for the polymerization.

In an Example of Patent Literature 1, it is described that a mold to which a polymerizable composition has been charged is gradually temperature-increased from 10°C to 120°C to perform 20-hour polymerization, thereby obtaining a molded article.

In an Example of Patent Literature 2, a mold into which a polymerizable composition has been charged is temperature-increased by small increments from 25°C to 120°C over a period of 16 hour, and the molded heated at 120°C for 4 hours, thereby obtaining a molded article.

Patent Literature 1: International Publication (WO) No. 2014/027427
Patent Literature 2: International Publication (WO) No. 2014/133111

## SUMMARY OF INVENTION

### Problem to be Solved by Invention

As described above, it has been common that the process for production of an optical member includes performing a polymerization reaction over several hours to several tens of hours (for example, from about 20 hours to about 48 hours) while the temperature is gradually increased by heating.

Also, it has been an ordinary practice for the process for production of an optical member to use various tools such as expensive upper and lower molds (namely, a set of a mold member referred to as "upper mold" and a mold member referred to as "lower mold"), tapes as consumables, and gaskets, which need washing. Therefore, a method of producing an optical member capable of producing an optical member in a simple and convenient manner has been desired.

A problem to be solved by one embodiment of the present disclosure is to provide a method of producing an optical member capable of producing an optical member in a simple and convenient manner, and a cured product that is obtained in the method of producing an optical member.

### Means for Solving the Problem

Specific means for solving the problem include the following aspects.

<1> A method of producing an optical member, including:

a first step of using a mold member and a substrate provided with a depressed portion including a bottom portion and an opening, to place the mold member at the opening, thereby defining a space between the depressed portion and the mold member;
a second step of placing, in the space, a polymerizable composition containing a monomer for an optical material; and
a third step of curing the monomer for an optical material in the polymerizable composition, thereby obtaining

a cured product of the polymerizable composition,
wherein the opening of the depressed portion has a larger area than the area of the bottom portion.

<2> The method of producing an optical member according to <1>, wherein the substrate includes an injection port for injecting the polymerizable composition into the space, and the second step includes injecting the polymerizable composition into the space through the injection port.
<3> The method of producing an optical member according to <2>, wherein the second step further includes hermetically sealing the injection port after injecting the polymerizable composition.
<4> The method of producing an optical member according to any one of <1> to <3>, wherein the substrate is provided with two or more of the depressed portion.
<5> The method of producing an optical member according to any one of <1> to <4>, wherein the substrate has an elastic modulus of from 10 MPa to 10,000 MPa.
<6> The method of producing an optical member according to any one of <1> to <5>, wherein the substrate has a heat distortion temperature of from 50°C to 300°C.
<7> The method of producing an optical member according to any one of <1> to <6>, wherein an external release agent is provided on the substrate at least at a wall surface of the depressed portion of the substrate.
<8> The method of producing an optical member according to any one of <1> to <7>, wherein the polymerizable composition includes two or more different monomers for an optical material, and a polymerization catalyst, the content of the polymerization catalyst is from 0.005 parts by mass to 2.0 parts by mass with respect to 100 parts by mass of a total of the two or more different monomers for an optical material, and the polymerizable composition has a viscosity of from 10 mPa·s to 1,000 mPa s as measured under conditions of 25°C and 60 rpm with a B-type viscometer.
<9> The method of producing an optical member according to any one of <1> to <8>, wherein the polymerizable composition includes two or more different monomers for an optical material, a polymerization catalyst, and a prepolymer that is a polymer of the two or more different monomers for an optical material and that contains a polymerizable functional group.
<10> The method of producing an optical member according to <8> or <9>, wherein the two or more different monomers for an optical material include at least one active hydrogen compound selected from the group consisting of a polythiol compound containing two or more mercapto groups, a hydroxythiol compound containing one or more mercapto groups and one or more hydroxy groups, a polyol compound containing two or more hydroxy groups, an episulfide compound, and an amine compound.
<11> The method of producing an optical member according to any one of <8> to <10>, wherein the polymerization catalyst satisfies the following condition 1:

Condition 1 -Ea/R is from -7,100 to -2,900,
wherein Ea is an activation energy calculated from reaction rate constants of the two or more different monomers for an optical material at two or more different temperatures, through an Arrhenius plot, and R is a gas constant (8.314 J/mol/K).

<12> The method of producing an optical member according to any one of <8> to <11>, wherein the polymerization catalyst includes at least one selected from the group consisting of an amine-based catalyst and an organotin-based catalyst.
<13> A cured product of two or more different monomers for optics, including at least one protruding portion intersecting with an outer circumferential face, wherein the cured product does not have any stria having a length of 1.0 mm or more within a radius of 15 mm from the center of the cured product.
<14> The cured product according to <13>, wherein the content of amine as measured by gas chromatograph mass spectrometry is from 0.03% by mass to 2.5% by mass.
<15> The cured product according to <13> or <14>, wherein the cured product includes at least one selected from the group consisting of an epithio resin and a thiourethane resin.

Advantageous Effect of Invention

According to one embodiment of the present disclosure, a method of producing an optical member capable of producing an optical member in a simple and convenient manner, and a cured product obtained in the method of producing an optical member are provided.

BRIEF DESCRIPTION OF DRAWINGS

Figure 1 is a schematic drawing for explaining a method of producing an optical member according to the present disclosure.
Figure 2 is a drawing for explaining the projected area when light is emitted to a depressed portion from the opening side.
Figure 3 is a drawing for explaining the shape of a depressed portion in which the area of the opening is larger than the area of the bottom portion.
Figure 4 is a drawing for explaining an operation in which a polymerizable composition is injected into a space through an injection port, as an example of the operation of the second step.

MODES FOR CARRYING OUT INVENTION

In the present disclosure, any numerical range expressed using "to" means a range including numerical values described before and after "to" as the lower limit value and the upper limit value.
In a case in which plural substances corresponding to a component of interest are present in a composition, the amount of the component in the composition described in the present specification means the total amount of the plural substances present in the composition, unless otherwise specified.
For numerical ranges described in a stepwise manner in the present disclosure, the upper limit value or the lower limit value of one numerical range may be replaced with the upper limit value or the lower limit value of another numerical range in the stepwise description. The upper limit value or the lower limit value of any numerical range described in the present disclosure may also be replaced with a value described in an Example.
In the present disclosure, the term "step" encompasses not only an independent step, but also encompasses a step that cannot be clearly distinguished from other steps, as long as the intended purpose of the step is achieved.

<<Method of Producing Optical Member>>

A method of producing an optical member according to the present disclosure includes:

a first step of using a mold member and a substrate provided with a depressed portion including a bottom portion and an opening, to place the mold member at the opening, thereby defining a space between the depressed portion and the mold member;
a second step of placing, in the space, a polymerizable composition containing a monomer for an optical material; and
a third step of curing the monomer for an optical material in the polymerizable composition, thereby obtaining a cured product of the polymerizable composition,
wherein the opening of the depressed portion has a larger area than the area of the bottom portion.

Due to the method of producing an optical member according to the present disclosure including the above-described limitations, the method is capable of producing an optical member in a simple and convenient manner.
It has been an ordinary practice for the process for production of an optical member to use various tools such as expensive upper and lower molds (namely, a set of a mold member referred to as "upper mold" and a mold member referred to as "lower mold"), tapes as consumables, and gaskets, which need washing.
However, the method of producing an optical member according to the present disclosure does not require upper and lower molds, tapes, gaskets, and the like.
Therefore, an optical member can be produced using the method of producing an optical member according to the present disclosure.
The "mold member" in the method of producing an optical member according to the present disclosure refers to a member that works as part of a cast (mold) for producing an optical member (for example, eyeglass lens).
For example, a member made of glass, metal, or resin and having a flat face or curved face for forming the optical surface (for example, a 0 C (0 curve) to 10 C (10 curve) optical surface) of an optical member to be produced can be used as the "mold member". Specifically, a surface of the polymerizable composition placed in the space which face contacts the flat face or curved face of the mold member would be an optical surface of a cured product (namely, optical member) after the polymerizable composition is cured.
The shape of the mold member may be a dish shape or a flat plate shape.
For example, the shape of a mold member for forming a 0 C optical surface may be a flat plate shape (for example, circular disc shape).

An outline of the method of producing an optical member according to the present disclosure is described with reference to Figure 1.

Figure 1 is a schematic drawing for explaining an outline of the method of producing an optical member according to the present disclosure.

First, a sheet 1, for example, is prepared as a material for producing a substrate 2, which includes depressed portions 3. The substrate 2, which includes the depressed portions 3, is produced using the sheet 1. There is no particular limitations on the method used for producing the substrate 2 having the depressed portions 3 from the sheet 1. The substrate 2, which includes the depressed portions 3 each including a bottom portion 4 and an opening 5, may be formed, for example, by forming the depressed portions 3 at the sheet 1 using a molding method such as press molding or vacuum molding.

The openings 5 of the depressed portions 3 of the obtained substrate 2 are covered with mold members 7, to lid the depressed portions 3. Here, since the opening 5 of each depressed portion 3 has an area that is larger than the area of the bottom portion 4, the mold member 7 is held at a position between the opening 5 and the bottom portion 4. As a result, a space is defined that is enclosed by the inner face and the bottom portion 4 of the depressed portion 3 and the mold member 7 (first step).

Next, a polymerizable composition 6 is filled into the above-defined space (second step). A surface of the polymerizable composition 6 that contacts the mold member 7 will be an optical surface of a cured product of the polymerizable composition 6 (namely, an optical member).

Thereafter, the cured product of the polymerizable composition can be obtained by polymerizing the polymerizable composition 6 in the space (third step). The cured product can be used as an optical member.

In the present specification, the combination of the mold member and the substrate having a depressed portion in the state of enclosing the space is sometimes referred to as a "cavity".

<First Step>

The first step in the present disclosure is a step of using a mold member and a substrate provided with a depressed portion including a bottom portion and an opening, and placing the mold member at the opening, to define a space between the depressed portion and the mold member. The opening of the depressed portion has a larger area than the area of the bottom portion.

The substrate is provided with a depressed portion that includes a bottom portion and an opening, and the opening of the depressed portion has a larger area than the area of the bottom portion. This results in, for example, the mold member being held at a position between the opening and the bottom portion in a case in which the opening is closed with a lid by placing the mold member at the opening. As a result, a space can be defined being enclosed by the bottom portion of the depressed portion, the inner face of the depressed portion, and the mold member.

(Substrate)

The substrate is provided with a depressed portion that includes a bottom portion and an opening, and the opening of the depressed portion has a larger area than the area of the bottom portion.

The bottom portion of the depressed portion preferably has a convex shape from the viewpoint of reducing the amount of the monomer to be used.

The number of depressed portions provided at the substrate may be one, or two or greater, and is preferably two or greater from the viewpoint of suitability for mass production.

In a case in which the substrate is provided with two or more depressed portions, the two or more depressed portions of the substrate preferably have substantially the same shape and substantially the same size. This design makes it easier to provide homogenous polymerization conditions for the two or more depressed portions, thereby facilitating production of two or more optical members excellent in outer appearance.

The opening of the depressed portion has a larger area than the area of the bottom portion. As a result of this, for example, in a case in which the opening is closed by a lid by placing the mold member at the opening, the mold member is retained at a position between the opening and the bottom portion.

From the foregoing viewpoint, the ratio (opening/bottom portion) of the area of the opening to the area of the bottom portion in the depressed portion is preferably at least 1.05, also preferably at least 1.10, also preferably at least 1.20.

The opening/bottom portion ratio is preferably about 1.05 from the viewpoint of preventing the lens diameter of the resultant lens from being too small as compared with the mold diameter.

The ratio (opening/bottom portion) of the area of the opening to the area of the bottom portion in the depressed portion is preferably at most 2.00, more preferably at most 1.50, still more preferably at most 1.30, from the viewpoint of ensuring that the shape of the optical member to be obtained is appropriate as product shapes.

The area of the bottom portion and the area of the opening refer to projected areas thereof when light is incident

on the depressed portion in a direction orthogonal to the substrate (specifically, a face of the substrate that is not provided with depressed portions) from the opening side toward the depressed portion.

This point is explained with reference to Figure 2.

Figure 2 is a drawing for explaining the projected areas when light is incident on a depressed portion from the opening side.

As illustrated in Figure 2, the area of the opening 5 is larger than the area of the bottom portion 4 in terms of the projected areas when light is incident on the depressed portion including the bottom portion 4 and the opening 5, from the opening side.

Since the area of the opening is larger than the area of the bottom portion, the mold member is retained at a position between the opening and the bottom portion.

As long as the area of the opening is larger than the area of the bottom portion, the shape of the depressed portion is not particularly limited. The portion extending form the opening to the bottom portion may form a slope face, or a step may be provided at an intermediate position between the opening and the bottom portion.

A specific example of the shape of the depressed portion is explained with reference to Figure 3.

Figure 3 is a drawing for explaining a shape of a depressed portion in which the area of the opening is larger than the area of the bottom portion.

As illustrated in Figure 3, in one specific example of the shape of the depressed portion 3, a step is provided at an intermediate position between the opening and the bottom portion. This enables the mold member 7 to be fixed by the step portion, and to serve as a lid to close the depressed portion.

The material of the substrate is not particularly limited.

For example, the substrate may include a resin such as polyethylene, polypropylene, an acrylic resin, polystyrene, or polyethylene terephthalate.

The substrate preferably includes at least one selected from the group consisting of polyethylene, polypropylene, and polyethylene terephthalate, from the viewpoint of providing a substrate having excellent elastic modulus and excellent heat resistance and in consideration of, for example, cost, versatility, and processability.

The substrate preferably includes at least one selected from the group consisting of polyethylene and polypropylene, from the standpoint of chemical resistance (for example, chemical resistance to a thiol compound or an isocyanate compound to be used as a lens monomer).

The elastic modulus of the substrate is preferably at least 10 MPa, more preferably at least 100 MPa, still more preferably at least 200 MPa, particularly preferably at least 250 MPa, from the viewpoint of providing an optical member having a desired shape.

The elastic modulus of the substrate is preferably at most 10,000 MPa, more preferably at most 5,000 MPa, still more preferably at most 1,000 MPa.

An elastic modulus of the substrate within the foregoing range provides excellent flexibility of the substrate. The excellent flexibility of the substrate enables an optical member obtained after curing to be easily detached from the substrate. For example, when the optical member is to be detached from the substrate, the excellent flexibility of the substrate makes it easy to form a gap between the tightly contacting faces of the optical member and the substrate by bending the substrate.

The elastic modulus is measured according to JIS T6501:2019.

The heat distortion temperature of the substrate is preferably equal to or higher than the room temperature, and the heat distortion temperature of the substrate is more preferably at least 50°C, still more preferably at least 70°C, and particularly preferably at least 100°C, from the viewpoint of heat resistance.

The heat distortion temperature of the substrate is preferably at most 300°C, more preferably at most 200°C, and still more preferably at most 150°C.

In the method of producing an optical member according to the present disclosure, a cured product may be obtained without performing heating during polymerization or with low-temperature short-time heating, as described below. Thus, the substrate is not required to have high heat resistance. In other words, according to the method of producing an optical member according to the present disclosure, a polymerizable composition can be cured even in a case in which the heat distortion temperature of the substrate is in the above-described range.

Ordinarily, there is a tendency that a higher heat distortion temperature of the substrate leads to higher mechanical strength, such as a higher elastic modulus of the substrate. Thus, in a case in which the heat distortion temperature is excessively high (i.e., the elastic modulus is excessively high), it is difficult to form a depressed portion in the substrate. Moreover, an excessively high heat distortion temperature makes it difficult to take the cured product out of the depressed portion since the excessively high heat distortion temperature makes it difficult to deform the substrate, such as twisting of the substrate or pushing up of the bottom portion of the depressed portion, at the time of taking the cured product, which has polymerized in the depressed portion, out of the depressed portion.

The thickness of the substrate is preferably at least 0.2 mm, and more preferably at least 0.5 mm.

A thickness of the substrate of at least 0.2 mm prevents the substrate from being distorted, for example, during

transportation of the substrate or upon pouring of a monomer for an optical material into the depressed portion, and makes it easier to achieve a desired shape of the optical member obtained by curing of the monomer for an optical material.

The thickness of the substrate is preferably at most 1.5 mm, and more preferably at most 1.0 mm.

A thickness of the substrate of at most 1.5 mm improves the flexibility of the substrate, and makes it easier to take an optical member, which has been obtained by pouring a monomer for an optical material into the depressed portion and curing the monomer, out of the depressed portion.

The heat distortion temperature is measured according to ASTM-D648-56, using a heat distortion temperature measurement apparatus.

An external release agent may be provided on the substrate, at least on a wall surface of the depressed portion of the substrate, from the viewpoint of facilitating detachment of an optical member produced (namely, a cured product of a polymerizable composition) from the depressed portion of the substrate.

In the case of preparing a substrate according to the above-described aspect, an external release agent may be provided on (for example, applied to) a surface of the substrate before formation of the depressed portion, and then the depressed portion may be formed; alternatively, an external release agent may be provided on (for example, applied to) at least a wall surface of the depressed portion of the substrate after the depressed portion is formed on the substrate.

In a case in which an external release agent is provided on a surface of the substrate before formation of the depressed portion, the external release agent may be provided only at a region at which the depressed portion is to be formed, or may be provided on the entire surface of the substrate before formation of the depressed portion.

The external release agent may be a fluorine-based coating agent, a silicone-based coating agent, or the like.

<Preparation Step>

The method of producing an optical member according to the present disclosure may include a preparation step of preparing a polymerizable composition that contains a monomer for an optical material.

The preparation step may be a step of simply providing a polymerizable composition that has been produced in advance, or may be a step of producing a polymerizable composition.

In the preparation step, the polymerizable composition is not particularly limited as long as the polymerizable composition includes two or more different monomers for an optical material, and a polymerization catalyst.

The polymerizable composition to be used may be a ready-made product, or may be prepared by mixing the polymerization catalyst and the at least two or more different monomers for an optical material.

The method used for mixing is not particularly limited, and known methods may be used.

The temperature during mixing of the above-described components is not particularly limited, and is preferably lower than or equal to 30°C, and more preferably lower than or equal to the room temperature (25°C).

There are cases in which it is preferable to set the temperature to a temperature lower than 25°C, from the standpoint of the pot life of the polymerizable composition to be prepared. Alternatively, in a case in which the solubility of an additive such as an internal release agent in the above-described components is not high, the above-described components may be heated in advance, and the additive may be dissolved in the above-described components.

When mixing the above-described components, the mixing is preferably performed in a dry inert gas, in order to prevent moisture from being incorporated into the polymerizable composition.

The preparation step is preferably a step of producing the polymerizable composition by mixing, in advance, the polymerization catalyst with some of the two or more different monomers for an optical material, and then mixing therewith the remainder of the two or more different monomers for an optical material.

When this manner of the preparation step is adopted, occurrence of polymerization between some of the two or more different monomers for an optical material and the remainder of the two or more different monomers for an optical material can be prevented until the mixture that includes some of the two or more different monomers for an optical material and the polymerization catalyst is mixed with the mixture that includes the remainder of the two or more different monomers for an optical material and does not include the polymerization catalyst.

Accordingly, the point of time at which polymerization initiates can be tuned by performing the preparation step including the foregoing sequence. This improves, for example, handleability at the time of injecting the polymerizable composition into the space in the above-described cavity.

In the preparation step, after some of the two or more different monomers for an optical material are mixed with the polymerization catalyst in advance, the remainder of the two or more different monomers for an optical material may be mixed thereinto at one time, or may be portionwise mixed thereinto multiple times.

Examples of specific modes of the preparation step include the following mode.

First, a mixed liquid is prepared by charging some of the monomers for an optical material and an additive (for example, an internal release agent). After the mixed liquid is stirred at 25°C for 1 hour to completely dissolve the components, some of the remainder of the monomers for an optical material is charged and stirred to form a homogeneous solution. This solution is subjected to defoaming, to obtain a first mixed liquid.

Next, the remainder of the monomers for an optical material, and the catalyst are stirred at 25°C for 30 minutes for complete dissolution, thereby obtaining a second mixed liquid.
The first mixed liquid and the second mixed liquid are then mixed, to obtain a polymerizable composition as a homogeneous solution.

<Polymerizable Composition>

The polymerizable composition in the present disclosure includes a monomer for an optical material.
A cured product of the polymerizable composition can be obtained by curing the monomer for an optical material contained in the polymerizable composition.
The polymerizable composition in the present disclosure preferably includes two or more different monomers for an optical material, and a polymerization catalyst.

(Monomer for Optical Material)

The polymerizable composition in the present disclosure includes a monomer for an optical material.
The monomer for an optical material is not particularly limited as long as the monomer is a monomer for optics.
For example, the monomer for an optical material may be a monomer used for producing an optical member having any of the following properties.
The optical member obtained using the monomer for an optical material may have a total light transmittance of 10% or more. The total light transmittance of the optical member can be obtained by measurement according to JIS K 7361-1 (1997).
The optical member obtained using the monomer for an optical material has a haze (namely, total haze) of less than or equal to 10%, and may preferably have a haze of less than or equal to 1%, still more preferably less than or equal to 0.5%. The haze of the optical member is a value measured according to JIS-K7105 at 25°C, using a haze meter [manufactured by Tokyo Denshoku Co., Ltd., TC-HIII DPK].
The optical member obtained using the monomer for an optical material preferably has a refractive index of higher than or equal to 1.58. The optical member obtained using the monomer for an optical material may have a refractive index of less than or equal to 1.80, or less than or equal to 1.75. The refractive index of the optical member may be measured according to JIS K7142 (2014).
The shape of the optical member obtained using the monomer for an optical material is not particularly limited, and may be a plate shape, a circular cylindrical shape, a cuboid shape, or the like.
The monomer for an optical material may be a polymerizable monomer that polymerizes when the after-mentioned polymerization catalyst is used. Specific examples thereof include an isocyanate compound, a polythiol compound containing two or more mercapto groups, a hydroxythiol compound containing one or more mercapto groups and one or more hydroxy groups, a polyol compound containing two or more hydroxy groups, an episulfide compound, and an amine compound.
The two or more different monomers for an optical material preferably include at least one active hydrogen compound selected from the group consisting of a polythiol compound containing two or more mercapto groups, a hydroxythiol compound containing one or more mercapto groups and one or more hydroxy groups, a polyol compound containing two or more hydroxy groups, an episulfide compound, and an amine compound.

[Isocyanate Compound]

Examples of the isocyanate compound include an aliphatic isocyanate compound, an alicyclic isocyanate compound, an aromatic isocyanate compound, and a heterocyclic isocyanate compound. One isocyanate compound is used singly, or two or more isocyanate compounds are mixed and used. The scope of the isocyanate compound may include a dimer, a trimer, and the like. Examples of the isocyanate compound include the exemplary compounds in WO 2011/055540.
Further examples of isocyanate compounds that can be used include: halogen-substituted products (for example, chlorine-substituted products, bromine-substituted products, and the like), alkyl-substituted products, alkoxy-substituted products, carbodiimide-modified products, urea-modified products, and burette-modified products of the above-described compounds; prepolymer-type modified products of the above-described compounds with a nitro-substituted product, a polyhydric alcohol, or the like; and dimerization or trimerization reaction products of the above-described compounds.
These compounds may be used singly, or a mixture of two or more thereof may be used.
In the present disclosure, an alicyclic isocyanate compound refers to an isocyanate compound containing an alicyclic structure and optionally containing a structure other than an alicyclic structure, such as a heterocyclic structure.

An aromatic isocyanate compound refers to an isocyanate compound that contains an aromatic structure and optionally contains any one of an aliphatic structure, an alicyclic structure, or a heterocyclic structure, or any combination thereof.

A heterocyclic isocyanate compound refers to an isocyanate compound that contains a heterocyclic structure and that contains neither an alicyclic structure nor an aromatic structure.

An aliphatic isocyanate compound refers to an isocyanate compound that contains none of an aromatic structure, an alicyclic structure, or a heterocyclic structure.

From the viewpoint of maintaining the quality of an optical member and shortening the production time of the optical member, the isocyanate compound in the present disclosure preferably includes at least one selected from isophorone diisocyanate, 2,5-bis(isocyanatomethyl)bicyclo-[2.2.1]-heptane, 2,6-bis(isocyanatomethyl)bicyclo-[2.2.1]-heptane, m-xylylene diisocyanate, 2,4-tolylene diisocyanate, 2,6-tolylene diisocyanate, dicyclohexylmethane diisocyanate, 1,3-bis(isocyanatomethyl)cyclohexane, 1,4-bis(isocyanatomethyl)cyclohexane, 1,6-hexamethylene diisocyanate, or 1,5-pentamethylene diisocyanate,

more preferably includes at least one selected from isophorone diisocyanate, 2,5-bis(isocyanatomethyl)bicyclo-[2.2.1]-heptane, 2,6-bis(isocyanatomethyl)bicyclo-[2.2.1]-heptane, dicyclohexylmethane diisocyanate, or 1,3-bis(isocyanatomethyl)cyclohexane, and

still more preferably includes at least one selected from 2,5-bis(isocyanatomethyl)bicyclo-[2.2.1]-heptane, 2,6-bis(isocyanatomethyl)bicyclo-[2.2.1]-heptane, dicyclohexylmethane diisocyanate, or 1,3-bis(isocyanatomethyl)cyclohexane.

[Active Hydrogen Compound]

Examples of the active hydrogen compound include a polythiol compound containing two or more mercapto groups, a hydroxythiol compound containing one or more mercapto groups and one or more hydroxy groups, a polyol compound containing two or more hydroxy groups, and an amine compound.

As an active hydrogen compound, an oligomer of any of the above-described active hydrogen compounds, or a halogen-substituted product (for example, a chlorine-substituted product, a bromine-substituted product, or the like) of any of the above-described active hydrogen compounds may be used.

The active hydrogen compound may be used singly, or in mixture of two or more kinds thereof.

(Polythiol Compound Containing Two or More Mercapto Groups)

Examples of the polythiol compound containing two or more mercapto groups include the exemplary compounds described in WO 2016/125736.

From the viewpoint of maintaining the quality of an optical member and shortening the production time of the optical member, the polythiol compound in the present disclosure preferably includes at least one selected from 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, pentaerythritol tetrakis(3-mercaptopropionate), bis(mercaptoethyl)sulfide, pentaerythritol tetrakis(2-mercaptoacetate), 2,5-bis(mercaptomethyl)-1,4-dithiane, 1,1,3,3-tetrakis(mercaptomethylthio)propane, 4,6-bis(mercaptomethylthio)-1,3-dithiane, or 2-(2,2-bis(mercaptomethylthio)ethyl)-1,3-dithiethane,

more preferably includes at least one selected from 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, pentaerythritol tetrakis(3-mercaptopropionate), pentaerythritol tetrakis(2-mercaptoacetate), or 2,5-bis(mercaptomethyl)-1,4-dithiane, and

still more preferably includes at least one selected from 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, or pentaerythritol tetrakis(3-mercaptopropionate).

(Polythiol Compound Containing Three or More Mercapto Groups)

Examples of the active hydrogen compound also include a polythiol compound containing three or more mercapto groups.

When the peak area is measured by high-performance liquid chromatography, the polymerizable composition in the present disclosure exhibits a peak area such that the peak area of compound (N1) is preferably at most 3.0, more

preferably at most 1.5, assuming that the peak area of polythiol compound containing three or more mercapto groups is 100, from the viewpoint of ease of control of a polymerization reaction.

When the peak area is measured by high-performance liquid chromatography, the peak area of the compound (N1) is preferably at least 0.01, assuming that the peak area of polythiol compound containing three or more mercapto groups is 100, from the viewpoint of promoting a polymerization reaction.

The peak area measured by high-performance liquid chromatography can be measured according to the method described in paragraph [0146] and the like of WO 2014/027665.

(Hydroxythiol Compound Containing One or More Mercapto Groups and One or More Hydroxy Groups)

Examples of the thiol compound having a hydroxy group include 2-mercaptoethanol, 3-mercapto-1,2-propanediol, glycerin bis(mercaptoacetate), 4-mercaptophenol, 2,3-dimercapto-1-propanol, pentaerythritol tris(3-mercaptopropionate), and pentaerythritol tris(thioglycolate). However, the examples are not limited to these exemplary compounds.

(Polyol Compound Containing Two or More Hydroxy Groups)

Examples of the polyol compound include one or more aliphatic or alicyclic alcohols. Specific examples thereof include a linear or branched chain aliphatic alcohol, an alicyclic alcohol, and an alcohol obtained by adding at least one selected from the group consisting of ethylene oxide, propylene oxide, and ε-caprolactone to any of the foregoing alcohols. More specific examples include the compound described as exemplary compounds in WO 2016/125736.

The polyol compound is preferably at least one selected from ethylene glycol, diethylene glycol, triethylene glycol, propylene glycol, 1,3-propanediol, 1,2-cyclopentanediol, 1,3-cyclopentanediol, 1,2-cyclohexanediol, 1,3-cyclohexanediol, or 1,4-cyclohexanediol.

(Episulfide Compound)

Examples of the episulfide compound include an epithioethylthio compound, a chain aliphatic 2,3-epithiopropylthio compound, an alicyclic 2,3-epithiopropylthio compound, an aromatic 2,3-epithiopropylthio compound, a chain aliphatic 2,3-epithiopropyloxy compound, a cycloaliphatic 2,3-epithiopropyloxy compound, and an aromatic 2,3-epithiopropyloxy compound. The episulfide compound may be used singly, or may be used in mixture of two or more thereof. Examples of the episulfide compound include the exemplary compounds described in WO2015/137401.

The episulfide compound is preferably at least one selected from the group consisting of bis(2,3-epithiopropyl)sulfide, bis(2,3-epithiopropyl)disulfide, bis(1,2-epithioethyl)sulfide, bis(1,2-epithioethyl)disulfide, and bis(2,3-epithiopropylthio)methane, and is more preferably bis(2,3-epithiopropyl)disulfide.

(Amine Compound)

Examples of the amine compound include:

primary polyamine compounds such as ethylenediamine, 1,2- or 1,3-diaminopropane, 1,2-, 1,3- or 1,4-diaminobutane, 1,5-diaminopentane, 1,6-diaminohexane, 1,7-diaminoheptane, 1,8-diaminooctane, 1,10-diaminodecane, 1,2-, 1,3- or 1,4-diaminocyclohexane, o-, m- or p-diaminobenzene, 3,4- or 4,4'-diaminobenzophenone, 3,4- or 4,4'-diaminodiphenyl ether, 4,4'-diaminodiphenylmethane, 4,4'-diaminodiphenylsulfide, 3,3' or 4,4'-diaminodiphenylsulfone, 2,7-diaminofluorene, 1,5-, 1,8- or 2,3-diaminonaphthalene, 2,3-, 2,6- or 3,4-diaminopyridine, 2,4- or 2,6-diaminotoluene, m- or p-xylylenediamine, isophoronediamine, diaminomethylbicycloheptane, 1,3- or 1,4-diaminomethylcyclohexane, 2-or 4-aminopiperidine, 2- or 4-aminomethylpiperidine, 2- or 4-aminoethylpiperidine, N-aminoethylmorpholine, and N-aminopropylmorpholine;

monofunctional secondary amine compounds such as diethylamine, dipropylamine, di-n-butylamine, di-sec-butylamine, diisobutylamine, di-n-pentylamine, di-3-pentylamine, dihexylamine, dioctylamine, di(2-ethylhexyl)amine, methyl hexylamine, diallylamine, N-methyl allylamine, piperidine, pyrrolidine, diphenylamine, N-methylamine, N-ethylamine, dibenzylamine, N-methyl benzylamine, N-ethyl benzylamine, dicyclohexylamine, N-methylaniline, N-ethylaniline, dinaphthylamine, 1-methylpiperazine, and morpholine; and

secondary polyamine compounds such as N,N'-dimethyl ethylenediamine, N,N'-dimethyl-1,2-diaminopropane, N,N'-dimethyl-1,3-diaminopropane, N,N'-dimethyl-1,2-diaminobutane, N,N'-dimethyl-1,3-diaminobutane, N,N'-dimethyl-1,4-diaminobutane, N,N'-dimethyl-1,5-diaminopentane, N,N'-dimethyl-1,6-diaminohexane, N,N'-dimethyl-1,7-diaminoheptane, N,N'-diethyl ethylenediamine, N,N'-diethyl-1,2-diaminopropane, N,N'-diethyl-1,3-diaminopropane,N,N'-diethyl-1,2-diaminobutane, N,N'-diethyl-1,3-diaminobutane, N,N'-diethyl-1,4-diaminobutane, N,N'-diethyl-1,5-diaminopentane, N,N'-diethyl-1,6-diaminohexane, N,N'-diethyl-1,7-diaminoheptane, piperazine, 2-methylpiperazine, 2,5-dimethylpiperazine, 2,6-dimethylpiperazine, homopiperazine, 1,1-di-(4-piperidyl)methane, 1,2-di-(4-piperidyl)ethane, 1,3-di-(4-piperidyl)propane, 1,4-di-(4-piperidyl)butane, and tetramethylguanidine.

Among the above compounds, the active hydrogen compound preferably includes a polythiol compound containing two or more mercapto groups, from the viewpoint of heightening the heat resistance and refractive index.
The content of the polythiol compound containing two or more mercapto groups is preferably 60% by mass or more, more preferably 70% by mass or more, still more preferably 80% by mass or more, with respect to the total mass of the active hydrogen compound.
Regarding the active hydrogen compound in the present disclosure, the total content of 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, and pentaerythritol tetrakis(3-mercaptopropionate) is preferably 60% by mass or more, more preferably 70% by mass or more, still more preferably 80% by mass or more, with respect to the total mass of the active hydrogen compound.
In the composition, the molar ratio of the sum of hydroxy groups (OH groups) and mercapto groups (SH groups) in the active hydrogen compound molecules to isocyanato groups (NCO groups) in the isocyanate compound molecules (NCO groups/(OH groups + SH groups)) is preferably higher than or equal to 0.8, more preferably higher than or equal to 0.85, and still more preferably higher than or equal to 0.9.
In the composition, the molar ratio of the sum of hydroxy groups (OH groups) and mercapto groups (SH groups) in the active hydrogen compound molecules to isocyanato groups (NCO groups) in the isocyanate compound molecules (NCO groups/(OH groups + SH groups)) is preferably lower than or equal to 1.2, more preferably lower than or equal to 1.15, and still more preferably lower than or equal to 1.1.

<Polymerization Catalyst>

The polymerizable composition in the present disclosure preferably includes at least one polymerization catalyst.
The polymerization catalyst is not particularly limited. For example, a basic catalyst, an organometallic catalyst, zinc carbamate, an ammonium salt, or sulfonic acid can be used as a polymerization catalyst.
The polymerization catalyst may be used singly, or two or more polymerization catalysts may be combined, as appropriate, and used.

(Basic Catalyst)

The basic catalyst is, for example, an amine-based catalyst (the scope of which includes an imidazole-based catalyst).
Specific examples thereof include tertiary amine-based catalysts such as triethylenediamine, N,N-dimethylethanolamine, triethylamine, and N-ethylmorpholine, 2-methylpyrazine, pyridine, α-picoline, β-picoline, γ-picoline, 2,6-lutidine, 3,5-lutidine, 2,4,6-collidine, 3-chloropyridine, N,N-diethylaniline, N,N-dimethylaniline, hexamethylene tetramine, quinoline, isoquinoline, N,N-dimethyl-p-toluidine, N,N-dimethylpiperazine, quinaldine, 4-methylmorpholine, triallylamine, trioctylamine, 1.2-dimethylimidazole, and 1-benzyl-2-methylimidazole.
Among the above compounds, the basic catalyst is preferably an amine-based catalyst.
Examples of the amine-based catalyst include tertiary amine-based catalysts such as 3,5-lutidine, 2,4,6-collidine, triethylenediamine, N,N-dimethylethanolamine, triethylamine, and N-ethylmorpholine.
The amine-based catalyst preferably includes at least one selected from 3,5-lutidine, 2,4,6-collidine, triethylenediamine, N,N-dimethylethanolamine, or N-ethylmorpholine.
It is also preferable that the basic catalyst includes a compound represented by the following Formula (2) and/or a compound represented by the following Formula (3).

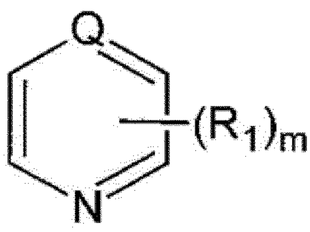 (2)

In Formula (2), $R_1$ represents a linear alkyl group having from 1 to 20 carbon atoms, a branched alkyl group having from 3 to 20 carbon atoms, a cycloalkyl group having from 3 to 20 carbon atoms, or a halogen atom, and $R_1$'s,

when present in plurality, may be the same as or different from each other. Q represents a carbon atom or a nitrogen atom, and m represents an integer of from 0 to 5.

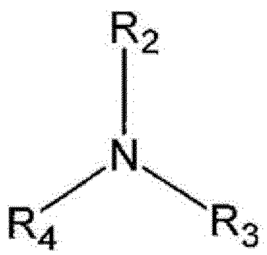

(3)

In Formula (3), each of $R_2$, $R_3$ and $R_4$ independently represents a linear alkyl group having from 3 to 20 carbon atoms, a branched alkyl group having from 3 to 20 carbon atoms, a cycloalkyl group having from 3 to 20 carbon atoms, an allyl group, or a hydrocarbon group having a hydroxy group.

The pKa value of the basic catalyst is preferably at least 1, more preferably at least 3, and still more preferably at least 4.

The pKa value of the basic catalyst is preferably at most 9, and more preferably at most 8.

The pKa value (negative logarithmic acid dissociation constant) can be measured by, for example, (a) a method described in The Journal of Physical Chemistry vol. 68, number 6, page 1560 (1964) or (b) a method with an Automatic Potentiometric Titrator (for example, AT-610 (trade name)) manufactured by Kyoto Electronics Manufacturing Co., Ltd. Further, (c) the negative logarithmic acid dissociation constants described in Kagaku Binran (Chemistry Handbook) edited by The Chemical Society of Japan (revised 3rd edition, June 25, 1984, published by Maruzen Co., Ltd.), for example, may be used.

(Organometallic Catalyst)

Examples of the organometallic catalyst include: an organotin-based catalyst; an organic acid salt of iron, nickel, zinc, or the like; an acetylacetonate complex; a catalyst composition formed of a metal carboxylate compound and a quaternary ammonium salt compound; a catalyst composition formed of a bicyclic tertiary amine compound; and a metal catalyst in which an alkoxy group, a carboxy group, or the like is coordinated to titanium or aluminum.

Among them, the organometallic catalyst is preferably an organotin-based catalyst.

Examples of the organotin-based catalyst include dibutyltin dichloride (DBC), dimethyltin dichloride (DMC), dibutyltin dilaurate (DBTDL), and dibutyltin diacetate.

The organotin-based catalyst preferably includes at least one selected from dibutyltin dichloride, dimethyltin dichloride, dibutyltin dilaurate, or dibutyltin diacetate.

The polymerization catalyst preferably includes at least one selected from the group consisting of a basic catalyst having a pKa value of from 4 to 8 and an organometallic catalyst.

The polymerization catalyst also preferably includes at least one selected from the group consisting of an amine-based catalyst and an organotin-based catalyst.

The polymerization catalyst preferably includes at least one selected from the group consisting of 3,5-lutidine, 2,4,6-collidine, triethylenediamine, N,N-dimethylethanolamine, N-ethylmorpholine, dibutyltin dichloride, dimethyltin dichloride, dibutyltin dilaurate, and dibutyltin diacetate.

In the polymerizable composition in the present disclosure, the content of the polymerization catalyst is preferably from 0.005 parts by mass to 2.0 parts by mass with respect to 100 parts by mass of the total amount of the two or more different monomers for an optical material.

The content of the polymerization catalyst in the present disclosure is large, as compared with that in conventional methods of producing optical members.

This enables the heat of reaction (specifically, self-generated heat) of the polymerizable composition to be generated in a short time when the monomer for an optical material in the polymerizable composition is polymerized in the third step. Therefore, the polymerization reaction can favorably be promoted. As described below, this increases the viscosity of the polymerizable composition, thereby enabling a high-quality optical member to be obtained in a shorter time than the time required by conventional techniques, while reducing thermal convection, which is surmised to be a cause of stria.

The generation of the heat of reaction in a short time enables a cured product to be obtained without carrying out heating during the polymerization or carrying out only a low-temperature short-time heating during the polymerization.

Due to the foregoing, the heat resistance of the substrate provided with the depressed portion in the present disclosure is allowed to be low. In general, substrates having lower heat resistance are more flexible and more easy to

bend. Therefore, the cured product obtained by the polymerization can be easily detached from the substrate.

When the content of the polymerization catalyst is at least 0.005 parts by mass with respect to 100 parts by mass of the total of the two or more different monomers for an optical material, polymerization reaction can favorably be promoted, and, therefore, a high-quality optical member can be obtained in a short time. Favorably promoting the polymerization reaction can improve the mold release property when the cured product is taken out of the space in the cavity.

From the foregoing viewpoints, the content of the polymerization catalyst with respect to 100 parts by mass of the total of the two or more different monomers for an optical material is preferably at least 0.05 parts by mass, more preferably at least 0.08 parts by mass, still more preferably at least 0.10 parts by mass, particularly preferably at least 0.13 parts by mass, and still further preferably at least 0.17 parts by mass.

When the content of the polymerization catalyst is at most 2.0 parts by mass with respect to 100 parts by mass of the total of the two or more different monomers for an optical material, handling properties at the time of injecting the polymerizable composition into the space in the cavity can be improved, for example.

From the foregoing viewpoints, the content of the polymerization catalyst with respect to 100 parts by mass of the total of the two or more different monomers for an optical material is preferably at most 1.8 parts by mass, more preferably at most 1.5 parts by mass, still more preferably at most 1.0 part by mass, particularly preferably at most 0.5 parts by mass, and still further preferably at most 0.3 parts by mass.

The content of the polymerization catalyst can be appropriately set in accordance with the type of the polymerization catalyst, the types and use amounts of monomers to be used (an isocyanate compound, an active hydrogen compound, another component, and the like), and the shape of the desired molded article.

The above-described ranges for the content of the polymerization catalyst may be appropriately modified in accordance with the type of the monomer for an optical material and the type of the polymerization catalyst.

For example, in a case in which the monomers for an optical material include dicyclohexylmethane diisocyanate and a mixture of 5,7-dimercaptomethyl-1,11-dimercapto-3,6,9-trithiaundecane, 4,7-dimercaptomethyl-1,11-dimercapto-3,6,9-trithiaundecane and 4,8-dimercaptomethyl-1,11-dimercapto-3,6,9-trithiaundecane, and in which the polymerization catalyst includes 3,5-lutidine, the polymerization catalyst is preferably used at a content of at least 1.0 part by mass, more preferably used at a content of at least 1.5 parts by mass, with respect to 100 parts by mass of the two or more different monomers for an optical material.

For example, in a case in which the monomers for an optical material include 1,3-bis(isocyanatomethyl)cyclohexane, pentaerythritol tetrakis(2-mercaptoacetate), and 2,5-bis(mercaptomethyl)-1,4-dithiane, and in which the polymerization catalyst includes 3,5-lutidine, the polymerization catalyst is preferably used at a content of at least 0.03 parts by mass, more preferably at a content of at least 0.07 parts by mass, with respect to 100 parts by mass of the two or more different monomers for an optical material.

The polymerization catalyst preferably satisfies the following Condition 1.

[Condition 1] -Ea/R is greater than or equal to -7,100 and less than or equal to -2,900.

Here, Ea is an activation energy calculated from the reaction rate constants of the two or more different monomers for an optical material at two or more different temperatures through an Arrhenius plot, and R is the gas constant (8.314 J/mol/K).

When the polymerization catalyst satisfies Condition 1, the variations in the rate of polymerization during polymerization-curing of the polymerizable composition can be reduced. As a result, an optical member in which occurrence of optical strain and striae are reduced and which has excellent appearance can be obtained.

The value of Ea is calculated by the following method.

The value of Ea is calculated by performing

a property obtaining step of obtaining a property value 1a and property values 1b, wherein each property value 1b is a property value derived from remaining functional groups a polymerization-reactive compound after a composition 1 that includes the polymerization-reactive compound and a predetermined amount of polymerization catalyst is heated to and maintained at one of plural temperatures for a predetermined time, and the property value 1a is a property value derived from functional groups of the polymerization-reactive compound before the heating,

a remaining-functional group ratio calculation step of calculating remaining functional group ratios 1 for the plural temperatures, from the property value 1a and the property values 1b,

a reaction rate constant calculation step of calculating a reaction rate constants 1 for the plural temperatures based on the reaction rate equation, from the remaining functional group ratios 1, and

a fitting step of calculating an activation energy Ea1 and a frequency factor A1 from the reaction rate constants 1 for the plural temperatures through an Arrhenius plot.

Whether or not the polymerization catalyst satisfies Condition 1 is determined using the calculated Ea value.
Specific modes of the method of calculating the value of Ea and the method of determining whether or not the polymerization catalyst satisfies Condition 1 are the same as the specific modes thereof described in International Publication (WO) No. 2020/256057.

(Other Additives)

The polymerizable composition in the present disclosure may include any additives.
Examples of such additives include a photochromic compound, an internal release agent, a bluing agent, and an ultraviolet absorber.

(Photochromic Compound)

A photochromic compound is a compound of which molecular structure is reversibly changed by irradiation with light at a specific wavelength and of which light absorption characteristics (light absorption spectrum) changes therewith.
Examples of the photochromic compound for use in the present disclosure include a compound of which light absorption characteristics (light absorption spectrum) changes upon receipt of light at a specific wavelength.
The photochromic compound in the present disclosure is not particularly limited, and any compound selected from conventional known compounds that can be used for photochromic lenses may be selected and used, as appropriate. For example, one compound, or two or more compounds, selected from a spiropyran-based compound, a spirooxazine-based compound, a fulgide-based compound, a naphthopyran-based compound, a bisimidazole compound, or the like may be used in accordance with the desired coloration.

(Internal Release Agent)

The internal release agent is, for example, an acidic phosphoric ester. Examples of the acidic phosphoric ester include a phosphoric monoester and a phosphoric diester, each of which may be used singly, or in mixture of two or more thereof.

(Bluing Agent)

Examples of the bluing agent include an agent having an absorption band in the orange to yellow wavelength region from among the visible region and having a function of adjusting the hue of an optical member formed from a resin. More specifically, the bluing agent includes a substance exhibiting a blue to violet color.

(Ultraviolet Absorber)

Examples of ultraviolet absorbers that can be used include benzophenone-based ultraviolet absorbers such as 2,2'-dihydroxy-4-methoxybenzophenone, triazine-based ultraviolet absorbers such as 2-[4-[(2-hydroxy-3-dodecyloxypropyl)oxy]-2-hydroxyphenyl]4,6-bis(2,4-dimethylphenyl)-1,3,5-triazine, and benzotriazole-based ultraviolet absorbers such as 2-(2H-benzotriazol-2-yl)-4-methylphenol and 2-(2H-benzotriazol-2-yl)-4-tert-octylphenol, and preferably include benzotriazole-based ultraviolet absorbers such as 2-(2H-benzotriazol-2-yl)-4-tert-octylphenol and 2-(5-chloro-2H-benzotriazol-2-yl)-4-methyl-6-tert-butylphenol. These ultraviolet absorbers may be used singly, or in mixture of two or more thereof.

(Viscosity)

From the viewpoint of reducing stria, the viscosity of the polymerizable composition in the present disclosure is at least 10 mPa·s, preferably at least 40 mPa·s, more preferably at least 70 mPa·s, still more preferably at least 80 mPa·s, particularly preferably at least 100 mPa·s, still further preferably at least 120 mPa·s, as measured under the conditions of 25°C and 60 rpm with a B-type viscometer.
From the viewpoint of maintaining favorable handling properties at the time of forming an optical member into a desired shape, the viscosity of the polymerizable composition in the present disclosure is at most 1,000 mPa s, preferably at most 700 mPa s, and more preferably at most 400 mPa s, as measured under the conditions of 25°C and 60 rpm with a B-type viscometer.
The viscosity of the polymerizable composition in the present disclosure may be adjusted in accordance with the use in which the cured product obtained is to be used.

For example, in a case in which a cured product is obtained using a mold member for a plus lens, the edge is narrow (namely, the injection port is narrow) (for example, from 1 mm to 3 mm), and, in consideration of this, the polymerizable composition in the present disclosure preferably has a viscosity of from 10 mPa s to 100 mPa s from the viewpoint of reducing stria.

In a case in which a cured product is obtained using a mold member for an ordinary lens other than a plus lens, the edge is wide (namely, the injection port is wide) (for example, from 5 mm to 15 mm), and, in consideration of this, the polymerizable composition in the present disclosure preferably has a viscosity of from 10 mPa s to 1,000 mPa s, and more preferably from 100 mPa s to 1,000 mPa s, from the viewpoint of reducing stria.

An increased viscosity of the polymerizable composition can reduce thermal convection caused by a temperature difference between the inside and outside of the composition upon application of heat to the composition from the outside, and can reduce striae derived from thermal convection.

However, if the catalyst amount is small, the rate of thickening during polymerization is not sufficient, and. therefore, the maximum temperature difference does not become large enough to suppress thermal convection, and the temperature cannot be rapidly increased in a short time. Furthermore, the time it takes until the polymerization is completed is also long.

By increasing the amount of the catalyst to an optimal range in accordance with the present disclosure, the viscosity of the entire composition can be more rapidly increased. This makes it possible to reduce thermal convection caused by a rapid temperature increase while unevenness of polymerization is reduced, and enables polymerization to be carried out in a short time.

The polymerizable composition in the present disclosure preferably has a configuration in which the polymerizable composition includes a polymerization catalyst and two or more different monomers for an optical material, and in which the content of the polymerization catalyst is from 0.005 parts by mass to 2.0 parts by mass with respect to 100 parts by mass of the total of the two or more different monomers for an optical material, and in which the polymerizable composition has a viscosity of from 10 mPa s to 1,000 mPa s as measured under the conditions of 25°C and 60 rpm with a B-type viscometer.

When the polymerizable composition in the present disclosure has the foregoing configuration, the quality of the optical member to be obtained can be maintained, and the production time of the optical member can favorably be shortened.

Further, when the monomer for an optical material in the polymerizable composition is polymerized in the third step, the heat of reaction (namely, self-generated heat) of the polymerizable composition can be generated in a short time. Therefore, the polymerization reaction can favorably be promoted, and a high-quality optical member can be obtained in a shorter time than that required in conventional techniques.

Further, a cured product can be obtained without requiring heating during polymerization or can be obtained with a low-temperature short-time heating during polymerization.

Therefore, the heat resistance of the substrate provided with the depressed portion in the present disclosure is allowed to be low. In general, substrates having lower heat resistance are more flexible and are more easy to bend. Therefore, the cured product obtained by polymerization can easily be detached from the substrate.

[Polymerizable Prepolymer Composition]

The polymerizable composition in the present disclosure may be a polymerizable prepolymer composition that is a composition including a monomer for an optical material, a polymerization catalyst, and a prepolymer that is a polymer of the monomer for an optical material and that contains a polymerizable functional group.

The polymerizable prepolymer composition included in the scope of the polymerizable composition in the present disclosure preferably includes two or more different monomers for an optical material, a polymerization catalyst, and a prepolymer that is a polymer of the two or more different monomers for an optical material and that contains a polymerizable functional group.

The prepolymer is a polymer that is a polymer of two or more different monomers for an optical material and that contains a polymerizable functional group.

A cured product obtained by polymerizing the prepolymer and the two or more different monomers for an optical material can be used as an optical member.

Examples of the prepolymer include a polymer obtained by polymerization in which the equivalents ratio between polymerizable functional groups of two monomers for an optical material from among all monomers for an optical material is not 1: 1, or a polymer obtained by polymerization in which the equivalents ratio between two monomers for an optical material from among all monomers for an optical material is imbalanced.

The polymerizable functional group is a functional group that can polymerize with another polymerizable functional group, and specific examples thereof include a functional group having an active hydrogen, such as an isocyanato group or a mercapto group, as described below.

Being polymerized at an equivalents ratio of 1:1 indicates, for example in the case of carrying out polymerization using an isocyanate compound and a polythiol compound, that the polymerization is carried out such that the isocyanato groups of the isocyanate compound and mercapto groups of the polythiol compound are in a molar ratio of 1:1.

The polymerizable prepolymer composition in the present disclosure is preferably a composition including a polymerization catalyst and a prepolymer that is a polymer of two or more different monomers for an optical material and that contains a polymerizable functional group, and having a viscosity of from 10 mPa·s to 2,000 mPa·s as measured under the conditions of 25°C and 60 rpm with a B-type viscometer.

It is preferable that the viscosity of the polymerizable prepolymer composition hardly changes over time (namely, being stable). For example, the polymerizable prepolymer composition is preferably free of another component having a polymerizable functional group that tends to undergo a polymerization reaction with a polymerizable functional group contained in the prepolymer.

The viscosity of the polymerizable prepolymer composition being stable means that the change in viscosity during storage of the polymerizable prepolymer composition at 20°C for 24 hours is 10% or less.

In the polymerizable prepolymer composition in the present disclosure, the content of the polymerization catalyst is preferably from 0.1 parts by mass to 4.0 parts by mass with respect to 100 parts by mass of the total of the two or more different monomers for an optical material.

When the content of the polymerization catalyst is at least 0.1 parts by mass with respect to 100 parts by mass of the total of the two or more different monomers for an optical material, polymerization reaction can favorably be promoted, and, therefore, a high-quality optical member can be obtained in a short time. Favorably promoting the polymerization reaction can improve the mold release property when the cured product is taken out of the space in the cavity.

From the foregoing viewpoints, the content of the polymerization catalyst is preferably at least 0.15 parts by mass, and more preferably at least 0.20 parts by mass, with respect to 100 parts by mass of the total of the two or more different monomers for an optical material.

When the content of the polymerization catalyst is at most 4.0 parts by mass with respect to 100 parts by mass in total of the two or more different monomers for an optical material, handling properties at the time of injecting the polymerizable composition into the space in the cavity can be improved, for example.

From the foregoing viewpoints, the content of the polymerization catalyst is preferably at most 3.0 parts by mass, more preferably at most 2.0 parts by mass, and still more preferably at most 1.0 part by mass, with respect to 100 parts by mass of the total of the two or more different monomers for an optical material.

In some cases, it is preferable that the prepolymer in the polymerizable prepolymer composition in the present disclosure contains an isocyanato group from the viewpoint of handling properties.

In other words, a state in which only some of, rather than all of, isocyanato groups of the prepolymer molecules are polymerized is preferable. It is preferable that at least 85% by mass of isocyanato groups of the isocyanate compound molecules used in the preparation of the polymerizable prepolymer composition remain in the unpolymerized state.

When the prepolymer contains an isocyanato group, i.e., when the isocyanate compound is contained in excess of other monomers for an optical material that can polymerize with the isocyanate compound, the viscosity of the polymerizable prepolymer composition can be maintained to be low in a case in which the other monomers for an optical material have high viscosity, and handling of the composition is made easier.

It is also preferable that the prepolymer in the polymerizable prepolymer composition in the present disclosure includes substantially no isocyanato groups.

That the prepolymer includes substantially no isocyanato groups means a state in which almost all of isocyanate groups have been polymerized.

Specifically, that the prepolymer includes substantially no isocyanato groups means that the isocyanato group content of the prepolymer is less than or equal to the detection limit when measured with an IR spectrometer.

When the prepolymer includes substantially no isocyanato groups, isocyanate groups, which have high reactivity, are substantially absent, whereby the stability of the polymerizable prepolymer composition can be enhanced.

In a case in which the preparation step in the present disclosure is a step of preparing a polymerizable prepolymer composition, the polymerizable prepolymer composition can be prepared according to the following production method.

[Method of Producing Polymerizable Prepolymer Composition]

The method of producing a polymerizable prepolymer composition may include:

a raw material preparation step of preparing a polymerization catalyst and a monomer for an optical material; and
a prepolymer forming step of mixing a part of the amount of the monomer for an optical material and at least a part of the amount of the polymerization catalyst, and allowing at least a part of the foregoing partial amount of the monomer for an optical material to polymerize, so as to obtain a prepolymer, and thereby obtain a mixture that

contains the prepolymer.

The method of producing a polymerizable prepolymer composition preferably includes:

a raw material preparation step of preparing two or more different monomers for an optical material in a total amount of 100 parts by mass, and a polymerization catalyst in an amount of from 0.010 parts by mass to 2.0 parts by mass; and a prepolymer forming step of mixing a part of the amount of the two or more different monomers for an optical material, and at least a part of the amount of the polymerization catalyst, and allowing at least a part of the foregoing partial amount of the two or more different monomers for an optical material to polymerize, so as to obtain a prepolymer, and thereby obtain a mixture that contains the prepolymer.

By including the raw material preparation step and the prepolymer forming step, striae in the optical member to be obtained can be reduced, and the production time of the optical member can be shortened.

The method of producing a polymerizable prepolymer composition preferably further includes, in addition to the above-described raw material preparation step and prepolymer forming step, a polymerizable prepolymer composition production step of adding at least the remaining amount of the two or more different monomers for an optical material to the mixture that contains the prepolymer, thereby obtaining a polymerizable composition that contains the two or more different monomers for an optical material, the prepolymer, and the polymerization catalyst.

When the method of producing a polymerizable prepolymer composition further includes the polymerizable prepolymer composition production step in addition to the raw material preparation step and the prepolymer forming step, striae in the optical member to be obtained can more favorably be reduced, and the production time of the optical member can more favorably be shortened.

In the raw materials prepared in the raw material preparation step in the method of producing a polymerizable prepolymer composition, the content of the polymerization catalyst is preferably from 0.010 parts by mass to 2.0 parts by mass with respect to 100 parts by mass of the total of the two or more different monomers for an optical material. As with the case of the polymerizable composition, the content of the polymerization catalyst is large as compared with that in conventional methods of producing an optical member.

Due to this, a high-quality optical member in which striae are reduced can be obtained in a shorter time than that required in conventional techniques, as with the case of the polymerizable composition.

As with the case of the polymerizable composition, heating of the polymerizable composition is not essential in the method of producing a polymerizable prepolymer composition.

When the method of producing a polymerizable prepolymer composition includes the raw material preparation step, the prepolymer forming step, and the polymerizable prepolymer composition production step, convection in the space at which polymerization reaction takes place can be reduced, thereby enabling reduction of the occurrence of striae in the cured product to be obtained.

When the method of producing a polymerizable prepolymer composition includes the prepolymer forming step, the storage stability of the mixture that contains the prepolymer can be maintained at a more favorable state than that in a case in which the prepolymer forming is not performed.

For example, in a case in which the mixture that contains the prepolymer is stored for a certain period of time, polymerization reaction in the mixture is reduced. In other words, a longer pot life can be ensured.

<Raw Material Preparation Step>

The method of producing a polymerizable prepolymer composition includes a raw material preparation step of preparing a polymerization catalyst and a monomer for an optical material.

The method of producing a polymerizable prepolymer composition preferably includes a raw material preparation step of preparing two or more different monomers for an optical material in a total amount of 100 parts by mass, and a polymerization catalyst in an amount of from 0.010 parts by mass to 2.0 parts by mass.

In the raw material preparation step, it is preferable that two or more different monomers for an optical material in a total amount of 100 parts by mass, and a polymerization catalyst in an amount of from 0.010 parts by mass to 2.0 parts by mass are prepared.

In other words, it is preferable to use from 0.010 parts by mass to 2.0 parts by mass of a polymerization catalyst with respect to 100 parts by mass of the total of two or more different monomers for an optical material.

When at least 0.010 parts by mass of the polymerization catalyst is used with respect to 100 parts by mass of the two or more different monomers for an optical material, polymerization reaction can favorably be promoted, and, therefore, a high-quality optical member in which striae are reduced can be obtained in a short time. Favorably promoting the polymerization reaction can improve the mold release property when the cured product is taken out of the space in the cavity.

From the foregoing viewpoints, the polymerization catalyst is preferably used in an amount of at least 0.015 parts by mass, more preferably used in an amount of at least 0.038 parts by mass, still more preferably used in an amount of at least 0.10 parts by mass, and particularly preferably used in an amount of at least 0.17 parts by mass, with respect to 100 parts by mass of the two or more different monomers for an optical material.
The above-described ranges for the content of the polymerization catalyst may be modified, as appropriate, in accordance with the types of the monomers for an optical material and the type of the polymerization catalyst.
For example, in a case in which the monomers for an optical material include 2,5(6)-bis(isocyanatomethyl)-bicyclo-[2.2.1]-heptane, pentaerythritol tetrakis(3-mercaptopropionate), and 4-mercaptomethyl-1,8-dimercapto-3,6-dithiaoctane, and in which the polymerization catalyst includes 3,5-lutidine, the polymerization catalyst is preferably used in an amount of at least 0.10 parts by mass, more preferably used in an amount of at least 0.17 parts by mass, with respect to 100 parts by mass of the two or more different monomers for an optical material.
When the polymerization catalyst is used in an amount of at most 2.0 parts by mass with respect to 100 parts by mass of the two or more different monomers for an optical material, the handling properties at the time of injecting the polymerizable composition into the space in the cavity can be improved, for example.
From the foregoing viewpoints, the polymerization catalyst is preferably used in an amount of at most 1.5 parts by mass with respect to 100 parts by mass of the two or more different monomers for an optical material.
The polymerization catalyst may be used in an amount of at most 1.0 part by mass, may be used in an amount of at most 0.3 parts by mass, or may be used in an amount of at most 0.15 parts by mass, with respect to 100 parts by mass of the two or more different monomers for an optical material, depending on the types of the monomers for an optical material and the type of the polymerization catalyst.
The amount of the polymerization catalyst can be appropriately set in accordance with the type of the polymerization catalyst, the types and use amounts of monomers to be used (an isocyanate compound, an active hydrogen compound, another component, and the like), and the shape of the desired molded article.

<Prepolymer Forming Step>

The method of producing a polymerizable prepolymer composition includes a prepolymer forming step of mixing a part of the amount of the monomer for an optical material and at least a part of the amount of the polymerization catalyst, and allowing at least a part of the foregoing partial amount of the monomer for an optical material to polymerize, so as to obtain a prepolymer, and thereby obtain a mixture that contains the prepolymer.
The method of producing a polymerizable prepolymer composition preferably includes a prepolymer forming step of mixing a part of the amount of the two or more different monomers for an optical material, and at least a part of the amount of the polymerization catalyst, and allowing at least a part of the foregoing partial amount of the two or more different monomers for an optical material to polymerize, so as to obtain a prepolymer, and thereby obtain a mixture that contains the prepolymer.
The present inventors thought that the occurrence of convection due to a heterogeneous temperature distribution in the space at which polymerization reaction is performed is one of the causes of stria generation in the cured product to be obtained.
With this in mind, the inventors conceive of increasing the viscosity of the polymerizable composition by means of preparing a prepolymer by polymerizing a part of the amount of the monomer for an optical material in advance, so that polymerizable composition becomes to contain the prepolymer. This enables convection in the space to be reduced.
According to the method of producing a polymerizable prepolymer composition, the temperature difference between the interior of the space and the outer circumference of the space is made less likely to occur, by preventing the self-generated heat from escaping to the outside.
We surmise that the method of producing a polymerizable prepolymer composition is capable of reducing striae in the cured product to be obtained, due to the combination of the foregoing mechanisms.
When the prepolymer forming step in the method of producing a polymerizable prepolymer composition involves the entire amount of one monomer for an optical material from among the two or more different monomers for an optical material, a part of the amount of another monomer for an optical material that is different from the one monomer for an optical material, and the entire amount or a part of the amount of the polymerization catalyst, a prepolymer having an excellent pot life can be obtained.
The mode for the part of the amount of two or more different monomers for an optical material is not particularly limited.
For example, a part of the amount of two or more different monomers for an optical material may refer to a part of the amount of each of the two or more different monomers for an optical material.
Alternatively, a part of the amount of two or more different monomers for an optical material may refer to the entire amount of one or more monomers for an optical material, from among the two or more different monomers for an optical material.

In the prepolymer forming step, a part of the amount of the polymerization catalyst may be used, or the entire amount of the polymerization catalyst may be used.

In a case in which a part of the amount of the polymerization catalyst is used, the mode of a part of the amount of the polymerization catalyst is not particularly limited, as with the case of a part of the amount of two or more different monomers for an optical material.

For example, a part of the amount of the polymerization catalyst may refer to a partial amount of the polymerization catalyst.

In a case in which a part of the amount of the polymerization catalyst is used, the part of the amount of the polymerization catalyst preferably refers to a fraction of from 5 parts by mass to 80 parts by mass, more preferably from 10 parts by mass to 60 parts by mass, and still more preferably from 15 parts by mass to 50 parts by mass, in 100 parts by mass of the polymerization catalyst, from the viewpoint of ensuring a long pot life.

From the viewpoint of ensuring a long pot life, the part of the amount of two or more different monomers for an optical material preferably refers to a fraction of from 5 parts by mass to 95 parts by mass, more preferably from 20 parts by mass to 80 parts by mass, and still more preferably from 30 parts by mass to 70 parts by mass, in 100 parts by mass of the two or more different monomers for an optical material.

Examples of specific modes of the prepolymer forming step are described below, but the prepolymer forming step is not limited to the following modes.

(Mode a)

The prepolymer forming step according to mode a is a step of mixing a part of the amount of two or more different monomers for an optical material and the entire amount of a polymerization catalyst, to allow at least a part of the foregoing partial amount of the two or more different monomers for an optical material to polymerize, so as to obtain a prepolymer, and thereby obtain a mixture that contains the prepolymer.

In mode a, the part of the amount of the two or more different monomers for an optical material preferably includes the entire amount of one monomer for an optical material from among the two or more different monomers for an optical material, and a part of the amount of another monomer for an optical material that is different from the one monomer for an optical material.

(Mode b)

The prepolymer forming step according to mode b is a step of mixing a part of the amount of two or more different monomers for an optical material, and a part of the amount of a polymerization catalyst, and allowing at least a part of the foregoing partial amount of the two or more different monomers for an optical material to polymerize, so as to obtain a prepolymer, and thereby obtain a mixture that contains the prepolymer.

In a case in which the method of producing a polymerizable prepolymer composition includes the prepolymer forming step according to mode b, the polymerizable prepolymer composition production step described below is a step of adding at least the remaining amount of the two or more different monomers for an optical material and the remaining amount of the polymerization catalyst to the mixture that contains the prepolymer, thereby obtaining a polymerizable composition that contains the two or more different monomers for an optical material, the prepolymer, and the polymerization catalyst.

In mode b, a design is preferable in which the two or more different monomers for an optical material include an isocyanate compound, and in which the part of the amount of the two or more different monomers for an optical material includes a part of the amount of the isocyanate compound, and in which the remaining amount of the two or more different monomers for an optical material includes the remaining amount of the isocyanate compound.

<Viscosity Adjustment Step>

The method of producing a polymerizable prepolymer composition preferably further includes a viscosity adjustment step of adjusting the viscosity of the mixture that contains the prepolymer to a viscosity of from 30 mPa·s to 2,000 mPa·s, after the prepolymer forming step but before the polymerizable prepolymer composition production step.

When the viscosity of the mixture that contains the prepolymer is in the above-described range, the viscosity of the polymerizable composition produced in the polymerizable prepolymer composition production step can be adjusted to be within a range appropriate from the viewpoint of reducing striae in the optical member to be obtained. As a result, striae in the optical member to be obtained can be reduced.

From the foregoing viewpoints, the viscosity of the mixture that contains the prepolymer is preferably from 40 mPa·s to 2,000 mPa·s, and more preferably from 50 mPa·s to 1800 mPas.

Viscosity can be measured under the conditions of 25°C and 60 rpm (revolutions per minute) with a B-type

viscometer.

The method of adjusting the viscosity of the mixture that contains the prepolymer is not particularly limited.

For example, the viscosity of the mixture that contains the prepolymer may be adjusted by a method such as adding a high-viscosity compound, heating, or stirring.

The temperature at which the mixture that contains the prepolymer is prepared is not particularly limited as long as the prepolymer can be obtained by a polymerization reaction at the temperature. For example, the temperature may be from 20°C to 50°C, or may be from 25°C to 45°C.

The stirring time in the preparation of the mixture that contains the prepolymer is not particularly limited as long as the prepolymer can be obtained by a polymerization reaction with the stirring time. For example, the stirring time may be from 30 minutes to 5 hours, or may be from 1 hour to 5 hours.

The method of preparing the mixture that contains the prepolymer may be, specifically, a method of preparing the mixture that contains the prepolymer while adjusting the viscosity by means of stirring under the conditions of 40°C and 3 hours.

<Polymerizable Prepolymer Composition Production Step>

The method of producing a polymerizable prepolymer composition may include a polymerizable prepolymer composition production step of adding at least the remaining amount of the monomer for an optical material to the mixture that contains the prepolymer, thereby obtaining a polymerizable prepolymer composition that contains the monomer for an optical material, the prepolymer, and the polymerization catalyst.

The method of producing a polymerizable prepolymer composition preferably includes a polymerizable prepolymer composition production step of adding at least the remaining amount of the two or more different monomers for an optical material to the mixture that contains the prepolymer, thereby obtaining a polymerizable prepolymer composition that contains the two or more different monomers for an optical material, the prepolymer, and the polymerization catalyst.

The polymerizable prepolymer composition production step is a step of adding the remaining amount of the two or more different monomers for an optical material to the mixture that contains the prepolymer, thereby obtaining a polymerizable prepolymer composition that contains the two or more different monomers for an optical material, the prepolymer, and the polymerization catalyst.

Due to this, occurrence of polymerization between the prepolymer and the remaining amount of the two or more different monomers for an optical material can be prevented until the mixture that contains the prepolymer and the remaining amount of the two or more different monomers for an optical material are mixed.

Accordingly, when the polymerizable prepolymer composition production step is performed at an appropriate time, handling properties at the time of injecting the polymerizable prepolymer composition into the space in the cavity can be improved.

When the remaining amount of the at least two or more different monomers for an optical material is added to the mixture that contains the prepolymer in the polymerizable prepolymer composition production step, the remaining amount of the two or more different monomers for an optical material may be added at one time or may be added in multiple portions.

The remaining amount of the two or more different monomers for an optical material refers to the remainder of the amount of the two or more different monomers for an optical material other than the part of the two or more different monomers for an optical material in the prepolymer forming step.

The remaining amount of the two or more different monomers for an optical material may refer to an amount of one or more monomers for an optical material that have a functional group capable of polymerizing with a polymerizable functional group of the prepolymer, such that the amount of functional groups capable of polymerizing with polymerizable functional groups of the prepolymer is an amount (namely, equivalent amount) capable of substantially polymerizing with all polymerizable functional groups of the prepolymer molecules.

From the viewpoint of heightening the optical uniformity of the polymerizable composition, the remaining amount of the two or more different monomers for an optical material preferably includes the same monomer(s) as the monomer(s) for an optical material that form the prepolymer.

The temperature during mixing of the above-described components is not particularly limited, and is preferably lower than or equal to 30°C, and more preferably lower than or equal to the room temperature (25°C).

There are cases in which it is preferable to set the temperature for mixing the above-described components to a temperature lower than 25°C. In a case in which the solubility of an additive such as an internal release agent in the above-described components is not high, the above-described components may be heated in advance, and the additive may be dissolved in the above-described components.

Examples of specific modes of the polymerizable prepolymer composition production step include the following modes.

First, an additive (for example, an internal release agent) is charged to the mixture that contains the prepolymer,

thereby producing a mixed liquid. The mixed liquid is stirred at 25°C for 1 hour to completely dissolving the respective components, and then degassed, thereby obtaining a first mixed liquid.

The remaining amount of the monomer for an optical material, and, if necessary, the remaining amount of the polymerization catalyst are stirred at 25°C for 30 minutes to cause complete dissolution, thereby obtaining a second mixed liquid.

The first mixed liquid and the second mixed liquid are mixed and stirred, and then degassed, thereby obtaining a polymerizable composition as a homogeneous solution.

<Second Prepolymer Forming Step>

The method of producing a polymerizable prepolymer composition may further include, in addition to the above-described raw material preparation step and prepolymer forming step:

a second prepolymer forming step of mixing the remaining amount of the two or more different monomers for an optical material and the remaining amount of the polymerization catalyst, and allowing at least a part of the remaining amount of the two or more different monomers for an optical material to polymerize, so as to obtain a second prepolymer, and thereby obtain a mixture that contains a second prepolymer; and
a polymerizable prepolymer composition production step of adding the mixture that contains the second prepolymer to the mixture that contains the prepolymer, thereby obtaining a polymerizable composition that contains the prepolymer, the second prepolymer, and the polymerization catalyst.

When the method of producing a polymerizable prepolymer composition includes the above-described limitations, a mixture that contains the prepolymer obtained in the prepolymer forming step and a mixture that contains the second prepolymer obtained in the second prepolymer forming step can be obtained.

This enables the viscosity of the mixture that contains the prepolymer and the viscosity of the mixture that contains the second prepolymer to be close to each other, and thereby enables both mixtures to be mixed more easily.

The two or more different monomers for an optical material, the polymerization catalyst, specific modes, preferable modes, and the like in the second prepolymer forming step are respectively the same as the two or more different monomers for an optical material, the polymerization catalyst, specific modes, preferable modes, and the like in the prepolymer forming step.

In a case in which the method of producing a polymerizable prepolymer composition includes the second prepolymer forming step, the polymerizable prepolymer composition production step is a step of adding the mixture that contains the second prepolymer to the mixture that contains the prepolymer, thereby obtaining a polymerizable composition that contains the prepolymer, the second prepolymer, and the polymerization catalyst.

The mixture that contains the prepolymer, specific modes, preferable modes, and the like in the polymerizable prepolymer composition production step are respectively the same as specific modes, preferable modes, and the like in the above-described <Polymerizable

Prepolymer Composition Production Step>.

<Second Step>

The second step in the present disclosure is a step of placing, in the space, a polymerizable composition containing a monomer for an optical material, in a space.

The substrate may have an injection port for injecting the polymerizable composition into the space, and the second step may include injecting the polymerizable composition into the space through the injection port. In this case, for example, the polymerizable composition is injected from the outer circumferential face of the depressed portion into the space through the injection port.

The second step preferably includes hermetically sealing the injection port after the polymerizable composition is injected.

An example of the operation in the second step is described with reference to Figure 4.

Figure 4 is a drawing for explaining the operation of injecting the polymerizable composition into the space through an injection port, as an example of the operation in the second step.

First, as illustrated in Figure 4, an injection port 8 for charging the polymerizable composition is provided at a periphery of the opening of the substrate. A gas discharge port 9 for allowing the gas in the space to escape to the outside before curing or during curing may also be provided in addition to the injection port.

The opening 5 of the depressed portion 3, which includes the bottom portion 4 and the opening 5, may be covered with the mold member 7 to close the depressed portion 3 with the lid, and thereafter the polymerizable composition

may be injected through the injection port 8, thereby injecting the polymerizable composition into the space from the outer circumferential face of the depressed portion. During this process, the gas that was present in the space is discharged to the outside via a gas discharge port 9.

After the injection is completed, it is preferable that the injection port 8 and the gas discharge port 9 are hermetically closed before the third step (namely, curing of the polymerizable composition) and then the third step (namely, curing of the polymerizable composition) is carried out.

The second step may be a step of injecting the polymerizable composition into the space while the polymerizable composition is mixed again in a motionless mixer.

The second step may be a step of injecting the polymerizable composition into the space while the polymerizable composition is mixed again using a dynamic mixer, a static mixer, or the like.

This enables the heterogeneity of the distribution of the polymerizable composition to be eliminated while the polymerizable composition is fed to the space, and enables reduction in striae in the cured product to be obtained.

(Adjustment of Viscosity)

In the second step, the viscosity of the polymerizable composition may be adjusted to a value of from 10 mPa·s to 1,000 mPa as measured under the conditions of 25°C and 60 rpm with a B-type viscometer.

The viscosity of the polymerizable composition is preferably at least 10 mPa·s, more preferably at least 40 mPa·s, still more preferably at least 70 mPa·s, particularly preferably at least 80 mPa·s, still further preferably at least 100 mPa·s, and much more preferably at least 120 mPa s.

The viscosity of the polymerizable composition is preferably at most 1,000 mPa·s, more preferably at most 700 mPa s, and still more preferably at most 400 mPa s, from the viewpoint of maintaining favorable handling properties at the time of molding the optical member into a desired shape.

The method used for adjusting the viscosity of the polymerizable composition is not particularly limited.

For example, the viscosity of the polymerizable composition may be adjusted by a method such as addition of a high-viscosity compound, heating, or stirring.

<Third Step>

The third step in the present disclosure is a third step of curing the monomer for an optical material in the polymerizable composition, to obtain a cured product of the polymerizable composition.

Due to the method of producing an optical member according to the present disclosure including the third step, the polymerizable composition can be polymerized, and an optical member can be produced.

As described above, when the content of the polymerization catalyst in the polymerizable composition or in the polymerizable prepolymer composition is in the above-described range (for example, when the content of the polymerization catalyst in the polymerizable composition is 0.005 parts by mass to 2.0 parts by mass with respect to 100 parts by mass of the total of the two or more different monomers for an optical material), heating of the polymerizable composition or the polymerizable prepolymer composition is not essential.

A content of the polymerization catalyst in the polymerizable composition (including the polymerizable prepolymer composition) in the above-described range indicates that the content of the polymerization catalyst is high as compared with that in conventional methods for producing optical members.

Therefore, in the third step, the heat of reaction (namely, self-generated heat) of the polymerizable composition can be generated in a short time during polymerization of the monomer for an optical material in the polymerizable composition.

The heat of reaction can be utilized to promote the polymerization reaction of the monomer for an optical material in the polymerizable composition, so that a high-quality optical member can be obtained in a shorter time than that required in conventional techniques.

In conventional techniques, when a polymerization reaction is to be carried out, the polymerization reaction is allowed to proceed, mainly by heating the polymerizable composition. In contrast, in the above-described situation, heating of the polymerizable composition is not essential.

In the above-described situation, since the self-generated heat of the composition is also utilized, polymerization can proceed without excessively relying on heat supply from the outside. This, together with the increased viscosity of the composition, can reduce thermal heterogeneity and thermal convection in the polymerizable composition, and can reduce the occurrence of striae.

A "stria" in the present disclosure refers to a state in which the refractive index of a particular portion is different from the normal refractive index found in the surrounding portion. This state can also be expressed as a state in which use of the optical member in a desired application would experience a disadvantage. A stria is a kind of defect of an optical member.

In the above-described situation, heating of the polymerizable composition is not essential, but it is permissible to heat the polymerizable composition.

In the third step, the polymerizable composition may be left to stand still, which enables curing of the polymerizable composition utilizing the heat of polymerization reaction.

The environment in which the third step is performed is not particularly limited. Curing may be performed by heating the cavity (namely, the above-described combination of the mold member and the substrate having a depressed portion in the state of enclosing the space) from the outside of the cavity. However, the third step is preferably a step of curing the polymerizable composition by leaving the polymerizable composition to stand still in a closed space, from the viewpoint of enabling polymerization in a short time while heightening the optical quality with respect to striae and the like.

Leaving the polymerizable composition to stand still in a closed space prevents heat generated by self heat generation of the polymerizable composition from being released to the outside. This enables the heat generated by the self heat generation to be trapped within the closed space, thereby enabling more efficient promotion of polymerization reaction and production of an optical member in a shorter time.

The closed space is, for example, an thermally insulated environment.

The thermally insulated environment refers to an environment in which heat is trapped in the inside and in which heat conduction between the inside and the outside is suppressed. The environment in which heat conduction between the inside and the outside is suppressed means an environment in which heat conductivity between the inside of the closed space and the outside of the closed space is at a degree at which the polymerizable composition can be cured when left to stand still in the closed space.

The thermally insulated environment can be made, for example, using a thermally insulating material.

In other words, the polymerizable composition may be left to stand still in an thermally insulated container formed from an thermally insulating material, as a result of which heat is trapped in the interior of the thermally insulated container, and heat conduction between the inside and the outside can be suppressed.

The heat conductivity of the thermally insulating material is preferably 0.50 W/mK or less, more preferably 0.10 W/mK or less, still more preferably 0.05 W/mK or less.

The density of the thermally insulating material is preferably 10 kg/$m^3$ or more, more preferably 15 kg/$m^3$ or more, still more preferably 20 kg/$m^3$ or more.

In the "thermal insulation" or "thermally insulated environment", heating for maintaining the thermally insulating reaction tank in a constant-temperature state (constant-temperature reaction tank) is preferably performed, provided that polymerization reaction due to the heat reaction of the polymerizable composition is not interrupted, and that the polymerization reaction of the polymerizable composition is not excessively promoted by the heat supplied from the outside.

This enables the environmental temperature within the reaction tank (constant-temperature reaction tank) in which the cavity is placed to stand still to be maintained at a warm temperature-maintained state or a constant temperature state, in accordance with, for example, the state of temperature increase due to the self heat generation of the monomer for an optical material. Therefore, polymerization reaction can more favorably be promoted.

As the thermally insulated environment, a thermally insulated reaction tank or a constant-temperature reaction tank as described above may be used, for example.

For example, in a case in which the cavity to which the monomer has been injected is placed to stand still in a vacuum container, which is a thermally insulated reaction tank, thermally insulated polymerization under the thermally insulated environment using the thermally insulated reaction tank (constant-temperature reaction tank) can be performed according to following procedure.

An inner side surface of the vacuum container is covered with a member having thermally insulating properties/temperature maintaining properties, such as urethane foam or a cork, and the cavity to which the monomer has been injected is wrapped with a member such as a rag, if necessary. The cavity to which the monomer has been injected is then placed to stand still in the vacuum container.

The third step may be a step of leaving the polymerizable composition to stand still without heating from the outside, to cure the polymerizable composition.

As described above, in a case in which the content of the polymerization catalyst is in the above-described range, heating of the polymerizable composition is not essential.

In order to perform heating from the outside, there are cases in which an apparatus is used, which may increase an economic burden. In contrast, in the above-described situation, the method of producing an optical member according to the present disclosure can reduce the economic burden since the method is capable of producing an optical member in a simple manner.

The third step is preferably a step of leaving the polymerizable composition to stand still for from 2 hours to 10 hours, thereby curing the polymerizable composition.

In conventional methods, polymerization reaction is generally carried out for several hours to several tens of hours (for example, from about 20 hours to about 48 hours) while gradually raising the temperature by heating.

In a case in which the duration of the polymerization reaction is short, optical members can be obtained due to the polymerizable composition not completely curing, or the quality of optical members is deteriorated.
However, in the above-described situation, the method of producing an optical member according to the present disclosure enables production of an optical member in a short time while maintaining the quality of the optical member to be obtained. Specifically, an optical member can be produced by allowing the polymerizable composition to stand still for at most 10 hours.
From the above viewpoint, the polymerizable composition is more preferably allowed to stand still for at most 8 hours in the third step.
The polymerizable composition is preferably allowed to stand still for at least 2 hours, and more preferably allowed to stand still for at least 5 hours, from the viewpoint of obtaining a favorably cured optical member through a polymerization reaction.
In the third step, a microwave irradiation step of irradiating the polymerizable composition with a microwave for a predetermined time may also be included, if necessary.
A mode of the third step is, for example, a mode that includes the following step b.
Step b: leaving the cavity to which the polymerizable composition has been injected to stand still in a closed space for a predetermined time, to perform thermally insulated polymerization.

(Stepb)

Polymerization conditions are not particularly limited, and are preferably adjusted, as appropriate, in accordance with the composition of the polymerizable composition, the type and use amount of the catalyst, the shape of the cavity, and the like.
The cavity to which the polymerizable composition has been injected may be left to stand still under the thermally insulated environment for from 2 hours to 4 hours, to perform polymerization.
In step b, a heating step may be added, if necessary, after a thermally insulated polymerization process of leaving the cavity to which the polymerizable composition has been injected to stand still under the thermally insulated environment for a certain period of time.
In step b, while a step of leaving the cavity to which the polymerizable composition has been injected to stand still under the thermally insulated environment (thermally insulated polymerization) is performed, the cavity to which the polymerizable composition has been injected may be heated, continuously or intermittently, at a temperature not exceeding the self heat generation from the polymerizable composition in the thermally insulated polymerization process, or the interior of the thermally insulated reaction tank may be heated, continuously or intermittently, to maintain the environment temperature in the interior of the thermally insulated reaction tank, if necessary.

<<Cured Product>>

A cured product according to the present disclosure is a cured product of the polymerizable composition in the present disclosure or the polymerizable prepolymer composition in the present disclosure.
The cured product according to the present disclosure preferably includes at least one selected from the group consisting of an epithio resin and a thiourethane resin, and more preferably includes a thiourethane resin.
In a case in which an amine-based catalyst is used as a polymerization catalyst, the content of amine in the cured product according to the present disclosure is preferably at least 0.03% by mass, more preferably at least 0.05% by mass, and still more preferably at least 0.07% by mass, from the viewpoint of reducing striae.
The content of amine in the cured product according to the present disclosure is preferably at most 2.5% by mass, more preferably at most 2.0% by mass, and still more preferably at most 1.5% by mass, from the viewpoint of improving the handling properties of the polymerizable composition.
The content of the amine is a content of amine as measured by gas chromatograph mass spectrometry of a dichloromethane composition ultrasonically extracted after dispersing the cured product in dichloromethane.
The amount of amine in the cured product according to the present disclosure as measured by gas chromatograph mass spectrometry is preferably from 0.03% by mass to 2.5% by mass.
In the case of using an organotin-based catalyst, the content of tin in the cured product according to the present disclosure is preferably at least 0.05% by mass, more preferably at least 0.1% by mass, and still more preferably at least 0.2% by mass, from the viewpoint of reducing striae.
The content of tin in the cured product according to the present disclosure is preferably at most 2.5% by mass, more preferably at most 2.0% by mass, and still more preferably at most 1.5% by mass, from the viewpoint of improving the handling properties of the polymerizable composition.
The method used for measuring the content of amine in the cured product is as follows.
200 mg of the cured product that has been powdered by a metallic file, and 3 mL of dichloromethane are placed in a

centrifuge tube (volume: 10 mL), ultrasonic extraction is conducted at room temperature for 10 minutes using a ultrasonic cleaner (US-4, manufactured by Iuchi Seieido Co., Ltd.), and centrifugation is conducted at 4,000 rpm for 10 minutes using a centrifuge (desktop small-size centrifuge 2410, manufactured by KUBOTA Corporation).

The supernatant is collected, the residue is dispersed again in 3 mL of dichloromethane, the above-described ultrasonic extraction and centrifugation are conducted, and the supernatant is collected (hereinafter, also referred to as "residue extraction").

The residue extraction is conducted two more times, and then dichloromethane is added to the obtained supernatant liquid so that the total amount becomes 10 mL.

The 10 mL of the supernatant liquid obtained is filtered, and analyzed by gas chromatograph mass spectrometry (also referred to as "GC-MS".) (GC-MS apparatus: 6890GC/5973N MSD, manufactured by Agilent Technologies, column: CP-SII, 8 CB for amine (0.25 mm internal diameter × 30 m, F.T = 0.25 μm)), and the value of the area of a peak derived from amine is obtained. A calibration curve of the obtained value of the area value of the peak derived from amine vs the amount of amine is drawn, based on which the content of amine in the cured product is determined.

Here, the amine means an amine compound that can be used as a polymerization catalyst, or an amine compound derived from the amine compound.

The cured product according to the present disclosure preferably has a degree of devitrification of less than 50, more preferably less than 35, particularly in optical applications in which transparency to light is requested.

The degree of devitrification is measured by the following method.

Light from a light source (for example, LUMINAR ACE LA-150A manufactured by Hayashi-Repic Co., Ltd.) is allowed to pass through the cured product in the dark. An image of the light that has penetrated through the cured product is imported into an image processing apparatus (for example, an image processing apparatus manufactured by Ube Information Systems, Inc.), contrast processing is performed on the imported image, the degree of the contrast of the image after processing is quantified for respective pixels, and the value obtained by calculation of the average value of the numerical values of the degree of contrast at the respective pixels is taken as the degree of devitrification.

It is preferable that the cured product according to the present disclosure does not have any stria having a length of 1.0 mm or more within a radius of 15 mm from the center of the cured product, and it is more preferable that the cured product does not have any stria having a length of 1.0 mm or more within a radius of 15 mm from the center of the cured product and the outside of the radius of 15 mm from the center of the cured product.

More specifically, the cured product according to the present disclosure is preferably a cured product of two or more different monomers for optics, which does not have any stria having a length of 1.0 mm or more within a radius of 15 mm from the center of the cured product, and which has at least one protruding portion that intersects with the outer circumferential face.

The protruding portion is formed by curing of the polymerizable composition remaining at the injection port or the gas discharge port of the substrate.

<Annealing Step>

The method of producing an optical member according to the present disclosure may include, if necessary, an annealing step of performing annealing treatment of the cured polymerizable composition.

The annealing treatment is usually performed at a temperature of from 50 to 150°C, preferably performed at a temperature of from 90 to 140°C, and more preferably performed at a temperature of from 100 to 130°C.

<Other Steps>

The method of producing an optical member according to the present disclosure may further include other steps, as necessary.

<Application of Optical Member>

The optical member in the present disclosure can be used in a plastic lens, a prism, an optical fiber, an information recording substrate, a filter, a light-emitting diode, and the like.

Among them, the optical member in the present disclosure can be suitably used in a plastic lens, and can more suitably be used in a plastic lens for eyeglasses.

EXAMPLES

The present disclosure is more specifically described below with reference to Examples, but the present disclosure is not limited to the following Examples as long as the gist of the invention is retained.

(Example 1)

[Chemical Resistance Test 1]

A polypropylene sheet having a size of 10 mm × 50 mm (thickness: 0.5 mm, elastic modulus: 1,000 MPa, heat distortion temperature: 80°C) was immersed in 2,5(6)-bis(isocyanatomethyl)-bicyclo-[2.2.1]-heptane [monomer for an optical material] for 24 hours, and the ratio of the increase in weight of the sheet was measured. The increase was found to be within ±1%, and no change in appearance was detected.

[Chemical Resistance Test 2]

A polypropylene sheet having a size of 10 mm × 50 mm (thickness: 0.5 mm, elastic modulus: 1,000 MPa, heat distortion temperature: 80°C) was immersed in 4-mercaptomethyl-1,8-dimercapto-3,6-dithiaoctane [monomer for an optical material] as a monomer for an optical material for 24 hours. The ratio of the increase in weight of the sheet was measured, and found to be within ±1%, and no change in appearance was detected.

[Production of Cavity]

A polypropylene sheet (thickness: 0.5 mm, elastic modulus: 1,000 MPa, heat distortion temperature: 80°C) was heated to 180°C in a vacuum molding machine, and a tray as illustrated in Figure 4 (namely, a substrate provided with depressed portions 3 each including a bottom portion 4 and an opening 5) was prepared from the polypropylene sheet. The area of the opening of each depressed portion in the tray was 50.50 $cm^2$, and the area of each bottom portion in the tray was 49.00 $cm^2$.

4C upper molds each having a mold diameter of 78 mm and 4 C as mold members were mounted on the tray, to produce a cavity as illustrated in Figure 1 (namely, a combination of the tray and the upper molds).

[Preparation of First Raw Material Composition]

A mixed liquid was prepared by charging 0.1 parts by mass of an internal release agent for MR manufactured by Mitsui Chemicals, Inc. [internal release agent], 1.5 parts by mass of TINUVIN329 [ultraviolet absorber], and 50.6 parts by mass of 2,5(6)-bis(isocyanatomethyl)-bicyclo-[2.2.1]-heptane [monomer for an optical material]. The mixed liquid was stirred at 25°C for 1 hour, to cause complete dissolution. Thereafter, 3.6 parts by mass of pentaerythritol tetrakis(3-mercaptopropionate) [monomer for an optical material] and 3.8 parts by mass of 4-mercaptomethyl-1,8-dimercapto-3,6-dithiaoctane[monomer for an optical material] were charged into the mixed liquid, and the resultant mixture was stirred at 25°C for 5 minutes, to obtain a homogeneous solution.

Then, 0.2 parts by mass of 3,5-lutidine [polymerization catalyst] (pKa value = 6.14, - Ea/R = -3397) was charged into the obtained homogeneous solution, and the resultant mixture was stirred at 40°C for 3 hours, to polymerize the monomers for an optical material while controlling the viscosity. As a result, a mixture that contains a prepolymer was obtained.

Thereafter, the mixture that contains a prepolymer was degassed at 400 Pa and 25°C for 1 hour, to obtain a first raw material composition.

[Preparation of Second Raw Material Composition]

A homogeneous solution was obtained by charging 20.3 parts by mass of pentaerythritol tetrakis(3-mercaptopropionate) [monomer for an optical material] and 21.7 parts by mass of 4-mercaptomethyl-1,8-dimercapto-3,6-dithiaoctane [monomer for an optical material], and stirring the resultant mixture at 25°C for 15 minutes. The mixed liquid was degassed at 400 Pa and 25°C for 1 hour, to obtain a second raw material composition.

[Shear and Stirring of Composition]

The first raw material composition was added into a first tank, and the second raw material composition was added into a second tank.

The compositions were fed, with a gear pump, to a power mixer, and a shear force was applied to the first raw material composition and second raw material composition fed to the power mixer. Thereafter, the mixture was allowed to pass through a capsule filter having a filter rating of 3 microns (manufactured by F-Tech Inc.), to obtain a polymerizable composition.

The polymerizable composition after passing through the filter was fed to a stirring tank, and a back pressure

was applied with nitrogen.

Thereafter, the polymerizable composition was stirred in a static mixer, and then filled into the cavity. Specifically, the polymerizable composition was injected into the space in the cavity (namely, the space between each depressed portion and the mold member) through the injection port 8, and then the injection port 8 and the gas discharge port 9 were hermetically closed.

(Curing of Polymerizable Composition)

The cavity that has been filled was left to stand still in a room at 25°C for 2 hours, thereby performing polymerization. Thereafter, the cavity was heated at 120°C for 1 hour, thereby further performing polymerization.

After the polymerization reaction was performed, the cavity was allowed to naturally cool, a cured molded article was taken out of the cavity, and further subjected to annealing treatment at 120°C for 2 hours, to obtain a molded article (a lens).

The molded article (namely, the cured product) did not have any stria having a length of 1.0 mm or more within a radius of 15 mm from the center of the cured product. The molded article had at least one protruding portion intersecting with the outer circumferential face.

The content of amine in the molded article was 0.2% by mass.

(Example 2)

A molded article (lens) was obtained according to the same method as that used in Example 1, except that the polypropylene sheet described in Example 1 was replaced with a polyethylene terephthalate sheet (thickness: 0.5 mm, elastic modulus: 4,000 MPa, heat distortion temperature: 50°C) having a surface to which NOVEC1720 as an external release agent had been applied and dried.

The molded article (namely, the cured product) did not have any stria having a length of 1.0 mm or more within a radius of 15 mm from the center of the cured product. The molded article had at least one protruding portion intersecting with the outer circumferential face.

The content of amine in the molded article was 0.2% by mass.

The chemical resistance test 1 and the chemical resistance test 2 described in Example 1 were performed, and the ratio of the increase in weight of the sheet was measured. The increase in weight was found to be within $\pm 1\%$, and no change in appearance was detected.

The disclosure of Japanese Patent Application No. 2021-211520, filed December 24, 2021, is herein incorporated by reference in its entirety.

All documents, patent applications, and technical standards mentioned in this specification are incorporated herein by reference to the same extent as if each individual document, patent application, or technical standard were specifically and individually indicated to be incorporated by reference.

## Claims

1. A method of producing an optical member, comprising:

    a first step of using a mold member and a substrate provided with a depressed portion including a bottom portion and an opening, to place the mold member at the opening, thereby defining a space between the depressed portion and the mold member;
    a second step of placing, in the space, a polymerizable composition containing a monomer for an optical material; and
    a third step of curing the monomer for an optical material in the polymerizable composition, thereby obtaining a cured product of the polymerizable composition,
    wherein the opening of the depressed portion has a larger area than an area of the bottom portion.

2. The method of producing an optical member according to claim 1, wherein the substrate comprises an injection port for injecting the polymerizable composition into the space, and the second step comprises injecting the polymerizable composition into the space through the injection port.

3. The method of producing an optical member according to claim 2, wherein the second step further comprises hermetically sealing the injection port after injecting the polymerizable composition.

4. The method of producing an optical member according to claim 1, wherein the substrate is provided with two or more of the depressed portion.

5. The method of producing an optical member according to claim 1, wherein the substrate has an elastic modulus of from 10 MPa to 10,000 MPa.

6. The method of producing an optical member according to claim 1, wherein the substrate has a heat distortion temperature of from 50°C to 300°C.

7. The method of producing an optical member according to claim 1, wherein an external release agent is provided on the substrate at least at a wall surface of the depressed portion of the substrate.

8. The method of producing an optical member according to claim 1, wherein the polymerizable composition comprises two or more different monomers for an optical material, and a polymerization catalyst, a content of the polymerization catalyst is from 0.005 parts by mass to 2.0 parts by mass with respect to 100 parts by mass of a total of the two or more different monomers for an optical material, and the polymerizable composition has a viscosity of from 10 mPa s to 1,000 mPa·s as measured under conditions of 25°C and 60 rpm with a B-type viscometer.

9. The method of producing an optical member according to claim 1, wherein the polymerizable composition comprises two or more different monomers for an optical material, a polymerization catalyst, and a prepolymer that is a polymer of the two or more different monomers for an optical material and that contains a polymerizable functional group.

10. The method of producing an optical member according to claim 8, wherein the two or more different monomers for an optical material comprise at least one active hydrogen compound selected from the group consisting of a polythiol compound containing two or more mercapto groups, a hydroxythiol compound containing one or more mercapto groups and one or more hydroxy groups, a polyol compound containing two or more hydroxy groups, an episulfide compound, and an amine compound.

11. The method of producing an optical member according to claim 8, wherein the polymerization catalyst satisfies the following condition 1:

Condition 1 -Ea/R is from -7,100 to -2,900,
wherein Ea is an activation energy calculated from reaction rate constants of the two or more different monomers for an optical material at two or more different temperatures through an Arrhenius plot, and R is a gas constant (8.314 J/mol/K).

12. The method of producing an optical member according to claim 8, wherein the polymerization catalyst comprises at least one selected from the group consisting of an amine-based catalyst and an organotin-based catalyst.

13. A cured product of two or more different monomers for optics, comprising at least one protruding portion intersecting with an outer circumferential face, wherein the cured product does not have any stria having a length of 1.0 mm or more within a radius of 15 mm from a center of the cured product.

14. The cured product according to claim 13, wherein a content of amine as measured by gas chromatograph mass spectrometry is from 0.03% by mass to 2.5% by mass.

15. The cured product according to claim 13, wherein the cured product comprises at least one selected from the group consisting of an epithio resin and a thiourethane resin.

FIG.1

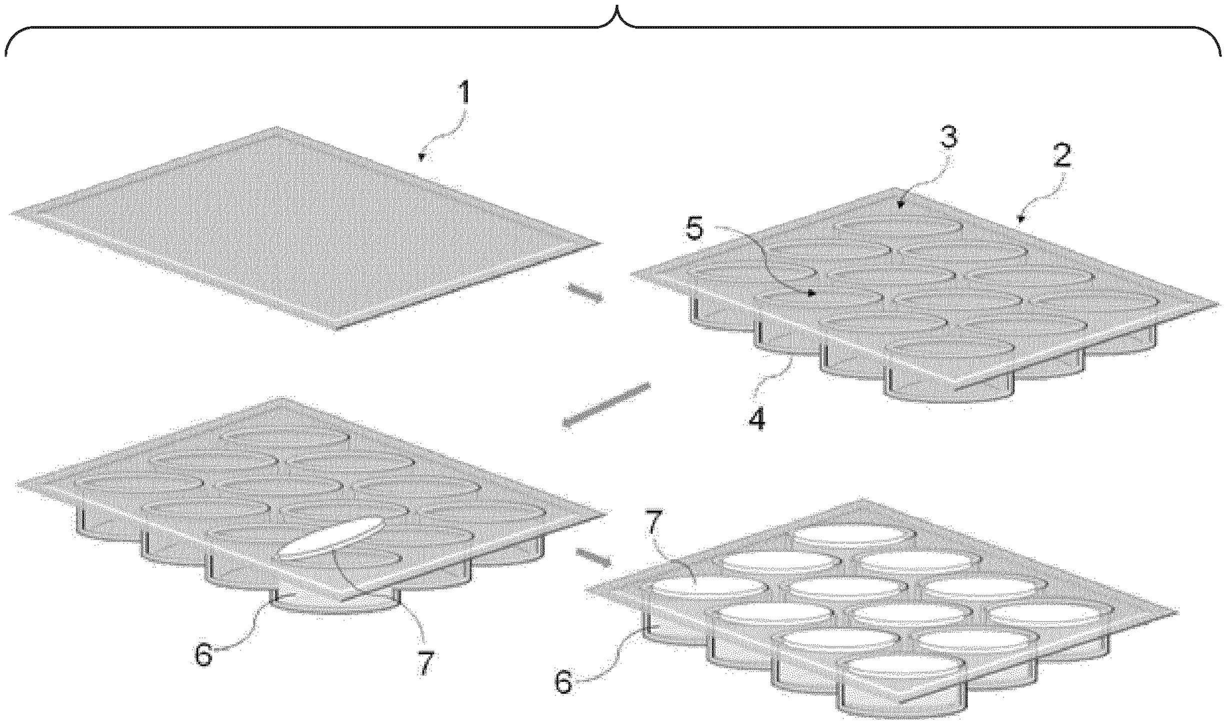


FIG.2

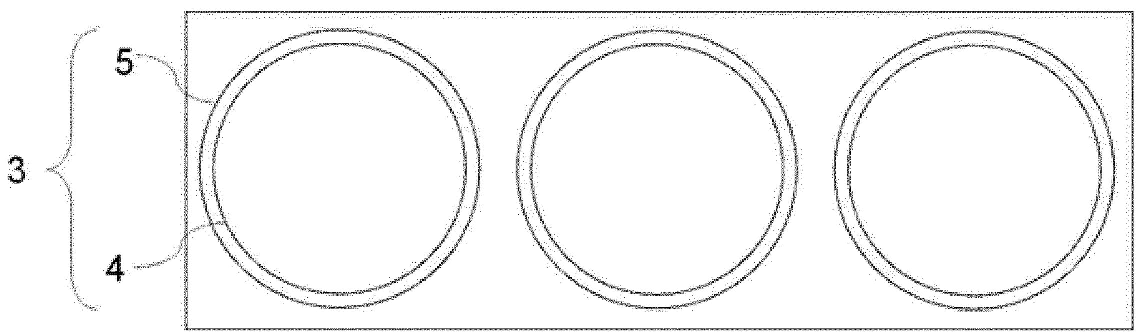


FIG.3

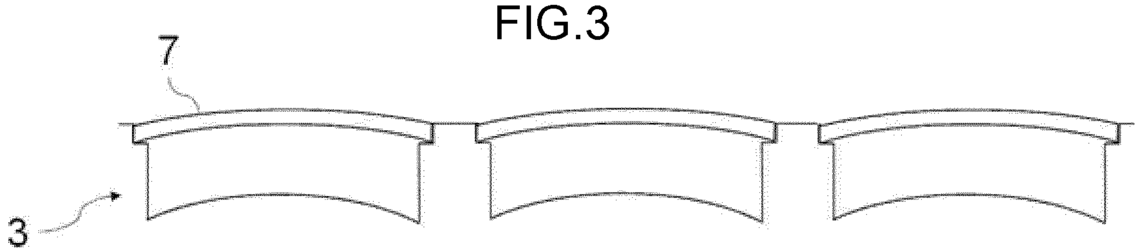

FIG.4

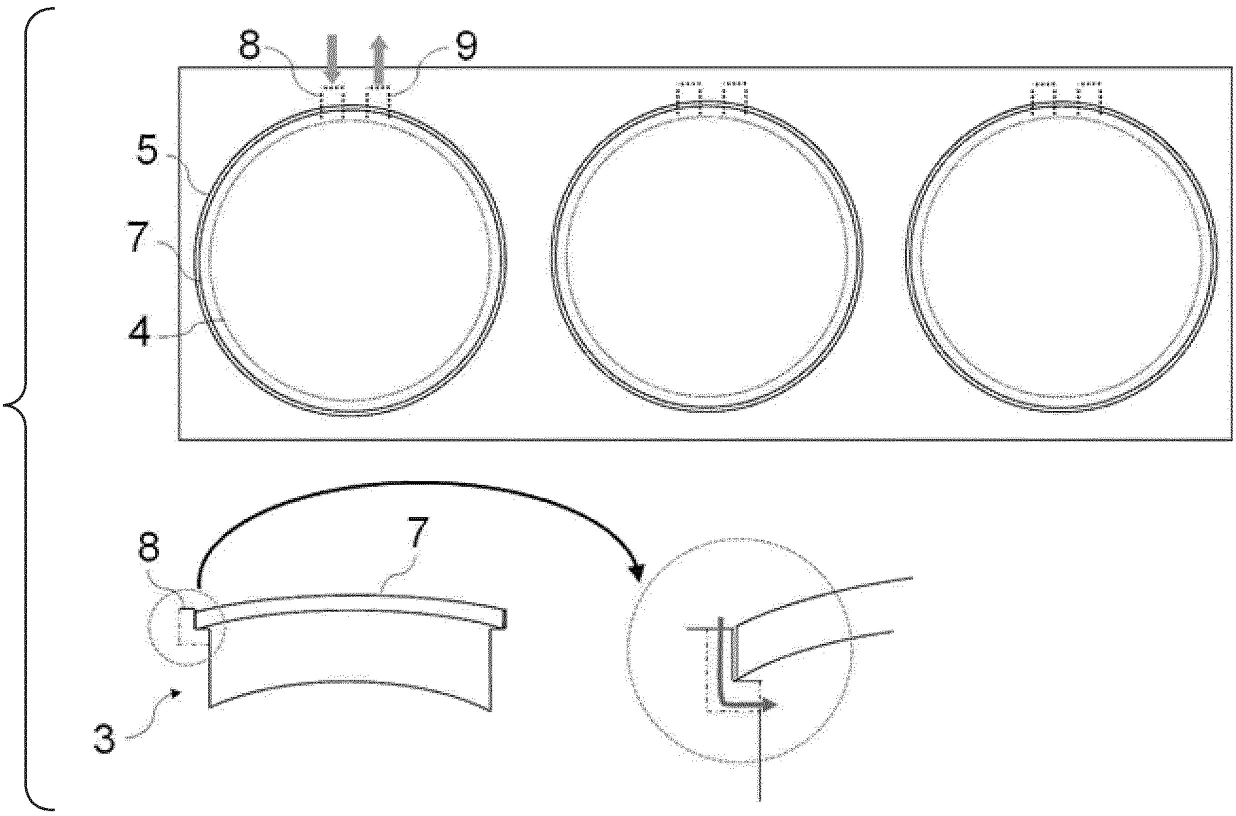

## INTERNATIONAL SEARCH REPORT

International application No.
**PCT/JP2022/047221**

**A. CLASSIFICATION OF SUBJECT MATTER**

***G02B 1/04***(2006.01)i; ***G02C 7/00***(2006.01)i
FI: G02B1/04; G02C7/00

According to International Patent Classification (IPC) or to both national classification and IPC

**B. FIELDS SEARCHED**

Minimum documentation searched (classification system followed by classification symbols)

G02B1/04; G02C7/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2008/093421 A1 (MENICON CO LTD) 07 August 2008 (2008-08-07) paragraphs [0033]-[0068], fig. 2-6, 10 | 1-4 |
| Y | paragraphs [0033]-[0068], fig. 2-6, 10 | 5-15 |
| Y | JP 2001-278931 A (MITSUI CHEMICALS INC) 10 October 2001 (2001-10-10) table 2 | 5-6 |
| Y | JP 2009-227316 A (DAINIPPON PRINTING CO LTD) 08 October 2009 (2009-10-08) table 1 | 5-6 |
| Y | JP 2021-054058 A (NGK INSULATORS LTD) 08 April 2021 (2021-04-08) paragraphs [0060]-[0063], fig. 6 | 7 |
| Y | JP 2021-054059 A (NGK INSULATORS LTD) 08 April 2021 (2021-04-08) paragraph [0085], fig. 9 | 7 |
| Y | WO 2021/182526 A1 (MITSUI CHEMICALS INC) 16 September 2021 (2021-09-16) paragraphs [0008], [0079] | 8-15 |

☑ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 February 2023** | **14 March 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2022/047221**

**C. DOCUMENTS CONSIDERED TO BE RELEVANT**

| Category* | Citation of document, with indication, where appropriate, of the relevant passages | Relevant to claim No. |
|---|---|---|
| Y | WO 2021/153632 A1 (MITSUI CHEMICALS INC) 05 August 2021 (2021-08-05) paragraphs [0008], [0095] | 8-15 |
| Y | WO 2021/153631 A1 (MITSUI CHEMICALS INC) 05 August 2021 (2021-08-05) paragraphs [0008], [0091] | 8-15 |
| A | US 2021/0371150 A1 (ALCON INC.) 02 December 2021 (2021-12-02) whole document, fig. 1-5 | 1-15 |

Form PCT/ISA/210 (second sheet) (January 2015)

**INTERNATIONAL SEARCH REPORT**
**Information on patent family members**

International application No.
**PCT/JP2022/047221**

| Patent document cited in search report | Publication date (day/month/year) | Patent family member(s) | Publication date (day/month/year) |
|---|---|---|---|
| WO 2008/093421 A1 | 07 August 2008 | (Family: none) | |
| JP 2001-278931 A | 10 October 2001 | US 2003/0055179 A1<br>table 8<br>WO 2001/053369 A1<br>EP 1275670 A1<br>CN 1395588 A<br>KR 10-2002-0063300 A | |
| JP 2009-227316 A | 08 October 2009 | (Family: none) | |
| JP 2021-054058 A | 08 April 2021 | (Family: none) | |
| JP 2021-054059 A | 08 April 2021 | (Family: none) | |
| WO 2021/182526 A1 | 16 September 2021 | US 2022/0041788 A1<br>paragraphs [0009]-[0016]<br>EP 3916470 A1<br>CN 115244106 A<br>KR 10-2022-0137932 A | |
| WO 2021/153632 A1 | 05 August 2021 | US 2022/0041789 A1<br>paragraphs [0009]-[0052]<br>EP 3919967 A1<br>KR 10-2022-0138004 A<br>CN 113557254 A | |
| WO 2021/153631 A1 | 05 August 2021 | US 2022/0041788 A1<br>paragraphs [0009]-[0016]<br>EP 3916470 A1<br>CN 115244106 A<br>KR 10-2022-0137932 A | |
| US 2021/0371150 A1 | 02 December 2021 | WO 2021/240438 A1<br>TW 202144164 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2014027427 A
- WO 2014133111 A
- WO 2011055540 A
- WO 2016125736 A
- WO 2014027665 A
- WO 2015137401 A
- WO 2020256057 A
- JP 2021211520 A

### Non-patent literature cited in the description

- *The Journal of Physical Chemistry,* 1964, vol. 68 (6), 1560
- **KAGAKU BINRAN.** Chemistry Handbook. Maruzen Co., Ltd, 25 June 1984